# EUROPEAN PATENT SPECIFICATION

(11) **EP 4 161 092 B1**
(45) Date of publication and mention of the grant of the patent: **25.02.2026**
(21) Application number: 21824779.9
(22) Date of filing: 24.05.2021
(51) Int. Cl.: H04R 1/10

(54) **ROTATING MECHANISM AND HOUSING CASE**
DREHMECHANISMUS UND GEHÄUSE
MÉCANISME ROTATIF ET BOÎTIER

(30) Priority: 16.06.2020 CN 202010550871; 16.06.2020 CN 202021113797 U
(43) Date of publication of application: 05.04.2023
(73) Proprietor: GUANGDONG OPPO MOBILE TELECOMMUNICATIONS CORP., LTD., Dongguan, Guangdong 523860 (CN)
(72) Inventor: CAI, Zhaoqiu, Dongguan, Guangdong 523860 (CN); CUI, Huacan, Dongguan, Guangdong 523860 (CN); ZHANG, Li, Dongguan, Guangdong 523860 (CN)
(74) Representative: Santarelli
(86) International application number: PCT/CN2021/095439
(87) International publication number: WO 2021/254100

(56) References cited:
- CN-A- 109 788 385
- CN-A- 110 166 876
- CN-A- 110 589 206
- CN-A- 110 589 206
- CN-A- 111 255 798
- CN-U- 207 518 812
- CN-U- 207 518 812
- CN-U- 213 186 464
- US-A1- 2019 069 066
- US-A1- 2019 289 382
- US-A1- 2020 084 532

## Description

### TECHNICAL FIELD

The present disclosure relates to the technology field of earphone storage, and in particular to a rotating mechanism and a housing case.

### BACKGROUND

A current earphone charging box includes a case body and a case cover pivotally connected to the case body. The case body forms a holding space with a top opening, and the case cover is configured to close the case body. The case cover pivots relative to the case body to be switched between an open position and a closed position. The holding space of the case usually requires to accommodate not only earphones but also other structures for charging the earphones, therefore it is important to make a structure of earphone charging box compact.

Document CN 110 589 206 A discloses a connecting mechanism comprising a base body provided with an opening at one end, a rotary plate rotatably mounted on the base body from the opening, and springs fixed to the base body and the rotary plate, respectively. The body is provided with a mounting cavity for accommodating the spring. The top and bottom of a pair of longitudinal walls of the mounting cavity are respectively provided with a rotation shaft hole and a limiting hole. The rotation plate is provided with a hole structure for fixing a rotation shaft. The two ends of the rotating sleeve are sleeved in the shaft hole, the free end of the rotating plate is provided with a fixing groove, and the spring includes a follower portion fixed in the fixed groove and an extension formed from the follower portion. The limiting end is located in the limiting hole.

Document CN 111 255 798 A discloses a two-way positioning structure comprising a fixed part, a rotating part movably connected to the fixed part, and an elastic part. The fixed part is provided with a groove at one end close to the rotating part, and the groove includes an inclined Surface and the abutting surface connecting the inclined surface, the connection of the inclined surface and the abutting surface is provided with a circular arc transition section, the elastic member includes a first resilient portion and a second resilient portion, so The first resilient part and the second resilient part are arranged symmetrically with each other, one end of the elastic element is connected to the rotating element, the other end of the elastic element abuts against the contact surface, and the elastic element is rotating When the angle reaches the preset angle, a positive force is generated on the rotating member.

### SUMMARY OF THE DISCLOSURE

Embodiments of the present application provide a rotating mechanism and a housing case, as set out in the appended set of claims.

### BRIEF DESCRIPTION OF THE DRAWINGS

FIG. 1 is a structural schematic view of one state of a housing case provided in some embodiments of the present disclosure, wherein a case cover is in a closed position.
FIG. 2 is a structural schematic view from another viewpoint of the housing case according to FIG. 1.
FIG. 3 is a structural schematic view of another state of the housing case according to FIG. 1, wherein the case cover is in an open position.
FIG. 4 is a structural schematic view of the housing case according to FIG. 3 without a storage cover.
FIG. 5 is an explosive structural schematic view of the housing case according to FIG. 3.
FIG. 6 is a structural schematic view of a case cover provided in some embodiments of the present disclosure.
FIG. 7 is a structural schematic view of a case body provided in some embodiments of the present disclosure.
FIG. 8 is a structural assembled schematic view of a connecting panel, an mounting base, a rotating shaft, and an elastic member provided in some embodiments of the present disclosure.
FIG. 9 is a structural schematic view from another viewpoint of the structure according to FIG. 8.
FIG. 10 is a structural schematic view from another viewpoint of the structure according to FIG. 8.
FIG. 11 an explosive structural schematic view of the structure according to FIG. 8.
FIG. 12 is a structural schematic view of a mounting base provided in some embodiments of the present disclosure.
FIG. 13 is a structural schematic view from another viewpoint of the mounting base according to FIG. 12.
FIG. 14 is a structural schematic view from another viewpoint of the mounting base according to FIG. 12.
FIG. 15 is a structural schematic view of a connecting panel provided in some embodiments of the present disclosure.
FIG. 16 is a structural schematic view from another viewpoint of the connecting panel according to FIG. 15.
FIG. 17 is a cross-sectional schematic view of the housing case according to FIG. 1.
FIG. 18 is a structural schematic view of another state of the structure according to FIG. 17, wherein the case cover is in an open position.
FIG. 19 is a schematic view illustrating a mechanics principle of the housing case in some embodiments of the present disclosure, wherein a case cover is in an open position.
FIG. 20 is a schematic view illustrating a mechanics principle of another state of the structure according to FIG. 19, wherein the case cover is in a closed position.
FIG. 21 is a structural schematic view of an elastic member provided in some embodiments of the present disclosure.

### DETAILED DESCRIPTION

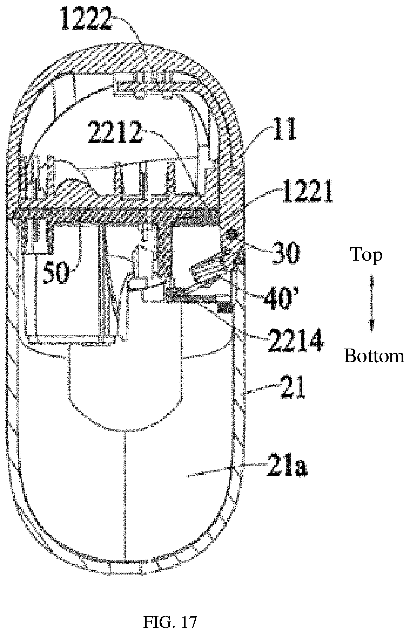

It should be noted that some embodiments and some technical features in the embodiments of the present disclosure may be combined with each other without conflict. In the embodiments of the present disclosure, "mm" refers to the international unit millimeter. The "top", "bottom", orientation or position relationship is based on the orientation or position relationship shown in the attached FIG. 17. In some embodiments, the top in FIG. 17 is "top" and the bottom is "bottom". It should be understood that these orientation terms are intended only to facilitate and simplify the description of the present disclosure, and are not intended to indicate or imply that the device or element referred to must have a particular orientation, be constructed and operate in a particular orientation, and therefore are not to be considered as a limitation of the present disclosure. The detailed description in the embodiments is to be understood as an explanatory statement of the purpose of the present disclosure and is not to be considered an undue limitation of the present disclosure.

Some embodiments of the present disclosure expect to provide a rotating mechanism and a housing case, featuring a compact structure. To achieve the above beneficial effect of the feature, a technical solution in the embodiments of the present disclosure is realized as follows.

Some embodiments of the present disclosure provide, in one aspect, a rotating mechanism including a connecting panel, a mounting base, and a rotating shaft.

The connecting panel has a first position and a second position.

The mounting base includes a base body and two protruding portions, one of the two protruding portions extends along one of both sides of the base body, and the other of the two protruding portions extends along the other of both sides of the base body. The base body defines a notch, the notch is defined between the two protruding portions, each of the protruding portions define an accommodation slot, and the accommodation slot is opened toward an outer side of the base body; when the connecting panel is arranged in the first position, a portion of the connecting panel is arranged on an inner side of the base body; and when the connecting panel is arranged in the second position, the portion of the connecting panel is arranged in the notch and closes the notch.

The rotating shaft extends through the connecting panel and the base body and further extending into the accommodation slot to enable the connecting panel to be switched between the first position and the second position.

In some embodiments, the base body includes a supporting bar and two connecting bars, the supporting bar extends in an axial direction of the rotating shaft, one of the connecting bars is connected to one of the two opposite ends of the supporting bar, and the other of the connecting bars is connected to the other of two opposite ends of the supporting bar. The supporting bar and the connecting bars cooperatively define the notch, each of the protruding portions is connected to a corresponding one of the connecting bars, and the rotating shaft extends through the connecting bars and further extends into the accommodation slot.

The connecting panel comprises a first panel body and a second panel body, the first panel body comprises an intermediate portion and an outer-edge portion, the outer-edge portion is arranged at a periphery of the intermediate portion, and the outer-edge portion defines an avoidance slot on each of both opposite sides along the axial direction of the rotating shaft; when the connecting panel is arranged in the second position, a portion of each of the connecting bars is arranged in the avoidance slot, the outer-edge portion, the supporting bar, and the two connecting bars are enclosed together to define a ring structure, and the intermediate portion is arranged in the ring structure; the second panel body is connected to an inner end face of the first panel body, the second panel body defines a shaft hole arranged along the axial direction of the rotating shaft, and the rotating shaft penetrates into the shaft hole.

In another aspect, a housing case is provided in some embodiments of the present disclosure. The housing case includes a case cover, a case body, and a rotating shaft.

The case cover includes a cover shell and a connecting panel connected to the cover shell.

The case body includes a shell body and a mounting base. The shell body defines a holding space having a top opening and another notch defined in a side wall of the shell body, and the holding space is fluidly connected to the another notch; the mounting base comprises a base body and two protruding portions, one of the two protruding portions extends along one of both sides of the base body, and the other of the two protruding portions extends along the other of both sides of the base body; the base body defines a notch, each of the protruding portions defines an accommodation slot, the mounting base is connected to the another notch, the protruding portions are arranged in the holding space, the accommodation slot is opened towards the side wall of the shell body, and the accommodation slot and the side wall of the shell body cooperatively define another shaft hole. The notch defined in the base body may also be referred as the second notch 221a, the notch defined in the side wall of the shell body may also be referred as the first notch 21b, the shaft hole defined in the second panel body may also be referred as the second shaft hole 1221a, while the another shaft hole defined by the accommodation slot and the side wall of the shell body cooperatively may also be referred as the first shaft hole 22a in the following.

The rotating shaft extends through the connecting panel and the base body and further extends into the another shaft hole to enable the cover shell to be switched between an open position and a closed position at which the shell body is closed; when the cover shell is in the closed position, a portion of the connecting panel is arranged in the notch to close the notch, and a portion of the base body and the portion of the connecting panel cooperatively close the another notch.

In some embodiments, the mounting base includes a supporting bar and two connecting bars.

The supporting bar extends in an axial direction of the rotating shaft. The supporting bar incudes a step surface formed on an end face of the supporting bar facing towards an outer side of the shell body, and the step surface is supported on a bottom wall of the another notch.

One of the connecting bars is connected to one of two opposite ends of the supporting bar, the other of the connecting bars is connected to the other of the two opposite ends of the supporting bar, and the supporting bar and the two connecting bars cooperatively define the notch.

Each of the protruding portions is connected to a corresponding one of the connecting bars, the rotating shaft extends through the connecting bars and into the another shaft hole, and the supporting bar and the two connecting bars are connected to the another notch.

In some embodiments, the connecting panel includes a first panel body and a second panel body.

The first panel body defines an avoidance slot on each of both opposite sides of the first panel body along the axial direction of the rotating shaft. When the cover shell is in the closed position, a portion of each of the connecting bars is arranged in the avoidance slot, and the portion of each of the connecting bars, a portion of the supporting bar, and the first panel body cooperatively enclose the another notch.

The second panel body includes a connecting portion and an extension portion extending from the connecting portion toward the case cover. The connecting portion is connected to a side of the first panel body near the holding space. The connecting portion defines a shaft hole disposed in the axial direction of the rotating shaft, and the rotating shaft penetrates into the shaft hole.

In some embodiments, the first panel body includes an intermediate portion and an outer-edge portion. The outer-edge portion is arranged at a periphery of the intermediate portion, and the avoidance slot is defined in the outer-edge portion; the outer-edge portion, the supporting bar, and the connecting bars are enclosed together to form a ring structure, and the intermediate portion is arranged in the ring structure.

In some embodiments, the first panel body defines a groove on an end face facing toward the holding space, the groove extends in the axial direction of the rotating shaft, and a portion of the rotating shaft is arranged in the groove.

In some embodiments, the second panel body includes a tab extending from the connecting portion toward the base body, the base body comprises a top panel connected to a top of each of the connecting bars, and the supporting bar and the top panel cooperatively define a rotating space. The rotating shaft is arranged between the top panel and the supporting bar along a height direction of the base body, the tab is capable of rotating around an axis of the rotating shaft within the rotating space, the tab is capable of abutting against the top panel to limit the open position of the cover shell, and the tab is capable of abutting against the supporting bar to limit the closed position of the cover shell.

In some embodiments, the connecting portion has a dimension along the axial direction of the rotating shaft less than a dimension of the first panel body along the axial direction of the rotating shaft.

And/or, the tab has a dimension along the axial direction of the rotating shaft less than the dimension of the first panel body along the axial direction of the rotating shaft.

In some embodiments, the top panel defines an opening slot opened towards the connecting portion; when the cover shell is in the closed position, a portion of the connecting portion is arranged within the opening slot.

In some embodiments, the mounting base is an integrally-formed structure.

And/or, the connecting panel is an integrally-formed structure.

In some embodiments, when the cover shell is in the closed position, an outer surface of the shell body, a surface of the base body arranged in the another notch, and a surface of the connecting panel cooperatively form a smooth surface.

In some embodiments, the housing case comprises an elastic member, the cover shell has a critical position arranged between the closed position and the open position, and the elastic member is loaded between the mounting base and the connecting panel; when the cover shell is arranged in the critical position, a torque exerted by the elastic member on the case cover is zero; and when the cover shell deviates to either side of the critical position along a direction of rotation, the elastic member exerts a driving torque on the case cover to drive the cover shell to move to the closed position or the open position.

In some embodiments, the elastic member includes one or more torsion springs, and each of the one or more torsion springs comprises a first leg, a second leg, and a spiral body; the first leg and the second leg are connected to opposite sides of the spiral body in an axial direction, the first leg is connected to the base body, the second leg is connected to the connecting panel to drive the cover shell to rotate around an axis of the rotating shaft, and an angle between an axis of the spiral body and the axis of rotating shaft is in a range from 45° to 90°.

In some embodiments, the number of the one or more torsion springs is two, an end of the first leg of one of the torsion springs is fixedly connected to an end of the first leg of the other of the torsion springs, and the axis of the spiral body of one of the torsion springs is substantially parallel to the axis of the spiral body of the other of the torsion springs.

In some embodiments, the connecting panel defines insertion holes on both opposite sides of the connecting panel along an axial direction of the rotating shaft, an end of the second leg of one of the torsion springs is arranged in one of the insertion holes, and an end of the second leg of the other of the torsion springs is arranged in the other of the insertion holes.

In some embodiments, the shell body defines an insertion slot on an inner surface of the housing, the base body is capable of being inserted into the insertion slot from the top opening of the holding space, and the base body is supported on a bottom wall of the insertion slot.

In some embodiments, the case body comprises a first protrusion bar and two second protrusion bars, the first protrusion bar and the two second protrusion bars protrude from the inner surface of the shell body, the first protrusion bar extends in a direction substantially parallel to an axial direction of the rotating shaft, and each of the two second protrusion bars extends from a corresponding one of two opposite ends of the first protrusion bar toward the case cover; an end of one of the second protrusion bars away from the shell body is bent toward a side of the other of the second protrusion bars, the two second protrusion bars, the first protrusion bar, and the inner surface of the shell body cooperatively define the insertion slot, and the base body is supported on the first protrusion bar.

In some embodiments, the housing case is an earphone charging box, earphones are stored in the holding space, and the earphone charging box is capable of charging the earphones.

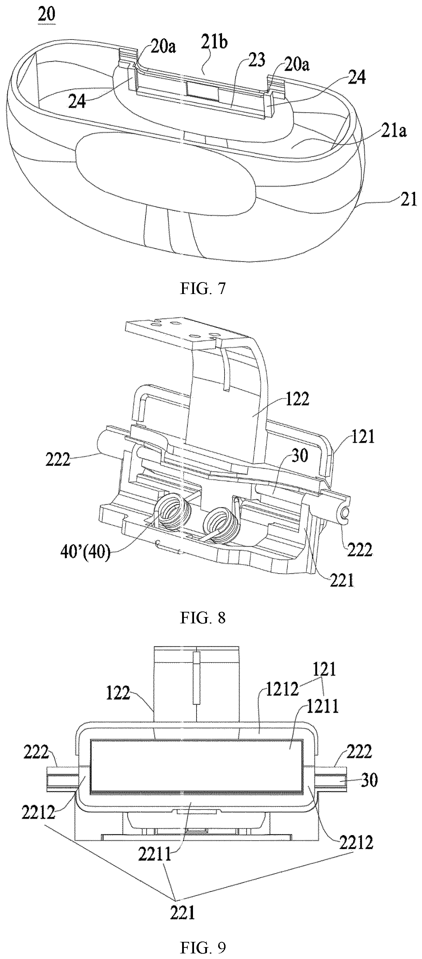

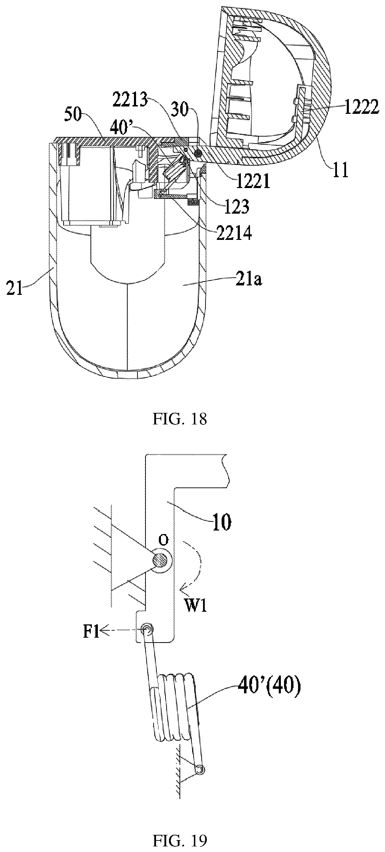

A rotating mechanism and a housing case provided in some embodiments of the present disclosure are described as following. As shown in FIGS. 8 to 16, the rotating mechanism provided in some embodiments of the present disclosure includes a connecting panel 12, a mounting base 22, and a rotating shaft 30. The connecting panel has a first position and a second position. The mounting base 22 includes a base body 221 and two protruding portions 222, one of the two protruding portions 222 extends along one of both sides of the base body 221, and the other of the two protruding portions 222 extends along the other of both sides of the base body 221. The base body 221 defines a second notch 221a, and the second notch 221a is defined between the two protruding portions 222. Each of the protruding portions 222 defines an accommodation slot 222a. The accommodation slot 222a is opened towards an outer side of the base body 221. That is, the accommodation slot 222a is opened toward a direction back from or away from the first position. When the connecting panel 12 is arranged in the first position, a portion of the connecting panel 12 is arranged on an inner side of the base body 221 (shown in FIG. 18). That is, the connecting panel 12 is arranged outside the second notch 221a and the portion of the connecting panel 12 does not close the second notch 221a. When the connecting panel 12 is arranged in the second position, the portion of the connecting panel 12 is arranged in the second notch 221a to close the second notch 221a (shown in FIG. 8). The rotating shaft 30 extends through the connecting panel 12 and the base body 221 and further extends into the accommodation slot 222a to enable the connecting panel 12 to be switched between the first position and the second position.

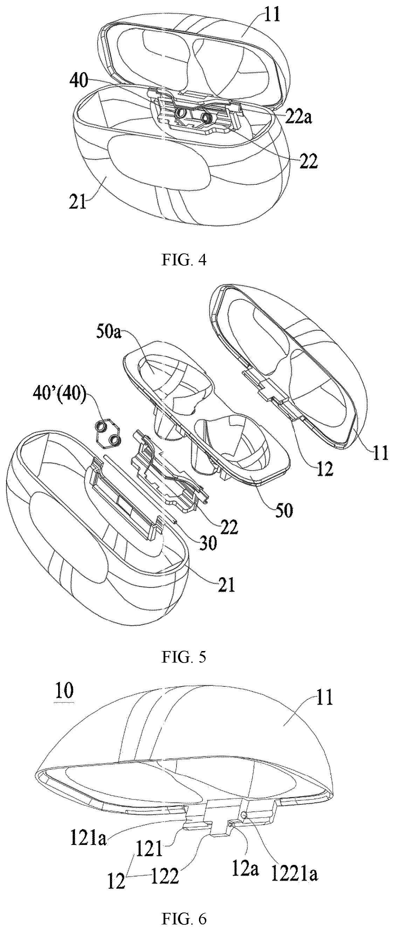

The connecting panel 12 rotates around the axis of the rotating shaft 30 relative to the mounting base 22. When the connecting panel 12 rotates around the axis of the rotating shaft 30 in a first direction, the connecting panel 12 may be arranged in the first position (as shown in FIG. 18). When the connecting panel 12 rotates around the axis of the rotating shaft 30 in a second direction, the connecting panel 12 may be arranged in the second position (as shown in FIG. 9). The mounting base 22 may be arranged on a housing. The housing may be a case body of a housing case, a panel, or a housing of another device that needs to achieve a rotational connection. The housing defines a first notch. The mounting base is disposed in the first notch of the housing, with the open portion of the accommodation slot 222a facing a side wall of the housing (as shown in FIG. 4), so that the accommodation slot 222a may be adopted to define a first shaft hole together with the side wall of the housing. Since the rotating shaft 30 extends into the accommodation slot 222a through the connecting panel 12 and the base body 221, that is, the rotating shaft 30 penetrates into the first shaft hole 22a (for example, regarding the housing as the case body of the housing case) through the connecting panel 12 and the base body 221, which means the rotating shaft 30 penetrates into the first shaft hole 22a through the connecting panel 12 and the base body 221 arranged in the first notch 21b, the base body 221 as well as the protruding portions 222 are adopted to bear a bending moment and torque. In this way, while ensuring that the mounting base 22 is able to bearing enough bending moment and torque, by applying the protruding portions 222 to bear most of the force from the rotating shaft 30, the size of a portion of the base body 221 connected to the rotating shaft 30 may be configured as small as possible, which means the size of the portion of the base body 221 arranged in the first notch 21b may be configured as small as possible. When the connecting panel 12 is in the second position, a user may observe the connecting panel 12 and the mounting base 22 from the outer side of the base body 221. With a small size of the portion of the base body 221 arranged in the first notch 21b, a visual effect of an integrated structure between the base body 221 and the connecting panel 12 may be achieved, avoiding a visual segmentation of the connecting panel 12 and the base body 221 caused by a situation that the portion of the base body 221 connected to the rotating shaft 30 has to be configured to be larger in order to ensure that the mounting base 22 is effectively stressed. From the perspective of industrial design, a structure in the embodiments of the present disclosure may greatly improve the aesthetics and increase the texture as well as product expression.

In some specific embodiments, the rotating mechanism in the embodiments of the present disclosure may be shown in FIGS. 8 to 16. The base body 221 includes a supporting bar 2211 and two connecting bars 2212. The connecting panel 12 includes a first panel body 121 and a second panel body 122. The supporting bar 2211 extends along an axial direction of the rotating shaft 30. That is, the supporting bar 2211 extends in a direction substantially parallel to the axial direction of the rotating shaft 30. In some embodiments, the supporting bar 2211 includes a step surface 2211a formed on an end face of the supporting bar 2211 facing toward an outer side of the mounting base 22. The step surface 2211a is supported on a bottom wall of the first notch of the housing. Each of the two connecting bars 2212 are connected to a corresponding end of the supporting bar 2211, respectively. The supporting bar 2211 and the two connecting bars 2212 cooperatively define or enclose the second notch 221a together. Each of the protruding portions 222 is connected to a corresponding one of the connecting bars 2212. The rotating shaft 30 extends through the connecting bars 2212 and further into the accommodation slot 222a. The first panel body 121 includes an intermediate portion 1211 and an outer-edge portion 1212. The outer-edge portion 1212 is arranged at a periphery of the intermediate portion 1211. The outer-edge portion 1212 defines an avoidance slot 121a on each of both opposite sides of the outer-edge portion 1212 along the axial direction of the rotating shaft 30. When the connecting panel 12 is in the second position, a portion of each of the connecting bars 2212 is arranged in the avoidance slot 121a. The outer-edge portion 1212, the supporting bar 2211, and the two connecting bars 2212 are enclosed together to form a ring structure. The intermediate portion 1211 is arranged in the ring structure. In this way, when the user observes the connecting panel 12 and the mounting base 22 from the outer side of the mounting base 22, a visual effect of an integrated structure among the outer-edge portion 1212, the supporting bar 2211, and the two connecting bars 2212 may be achieved. The second panel body 122 is connected to an inner end face of the first panel body 121. That is, the second panel body 122 is connected to an end face of the first panel body 121 near or close to the inner side of the base body 221. In some embodiments, the second panel body 122 includes a connecting portion 1221 and an extension portion 1222 extending from the connecting portion 1221 in a direction away from the mounting base 22. The connecting portion 1221 is connected to the inner end face of the first panel body 121. The extension portion 1222 is adopted as a force-bearing structure for connecting to an external structure. The second panel body 122 defines a second shaft hole 1221a disposed in the axial direction of the rotating shaft 30. The rotating shaft 30 penetrates the second shaft hole 1221a. In this way, by applying the second panel body 122 as the main force-bearing structure, the first panel body 121 may cover the second panel body 122 and the rotating shaft 30. In some embodiments, the second shaft hole 1221a may be defined in the connecting portion 1221. The supporting bar 2211 and the two connecting bars 2212 are connected to the first notch of the housing. The portion of each of the connecting bars 2212, a portion of the supporting bar 2211, and the first panel body 121 jointly or cooperatively close the first notch 21b. That is, when the rotating mechanism is arranged on the housing, the portion of each of the connecting bars 2212 and the portion of the supporting bar 2211 are both arranged in the first notch of the housing, and further cooperate with the portion of the connecting panel 12 to close the first notch of the housing. In this way, a side wall of the first notch of the housing is adopted to limit a movement of the base body 221 along the axial direction of the rotating shaft 30, and the bottom wall of the first notch of the housing is adopted to limit a downward movement of the base body 221, thereby improving the structural stability of the mounting base 22.

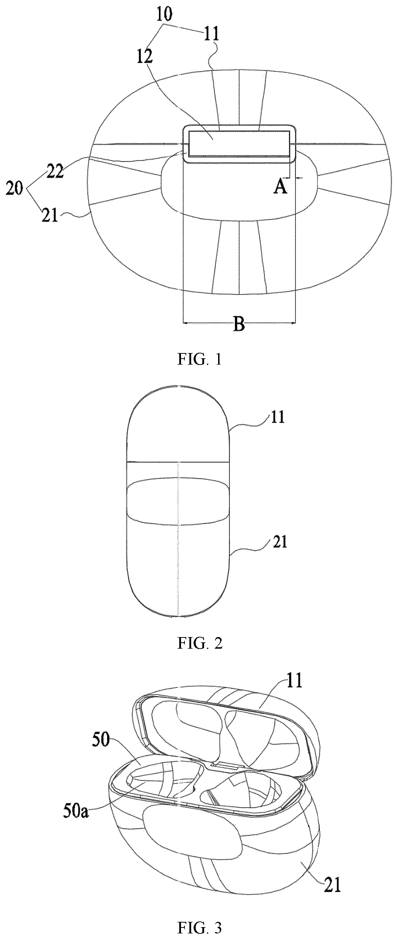

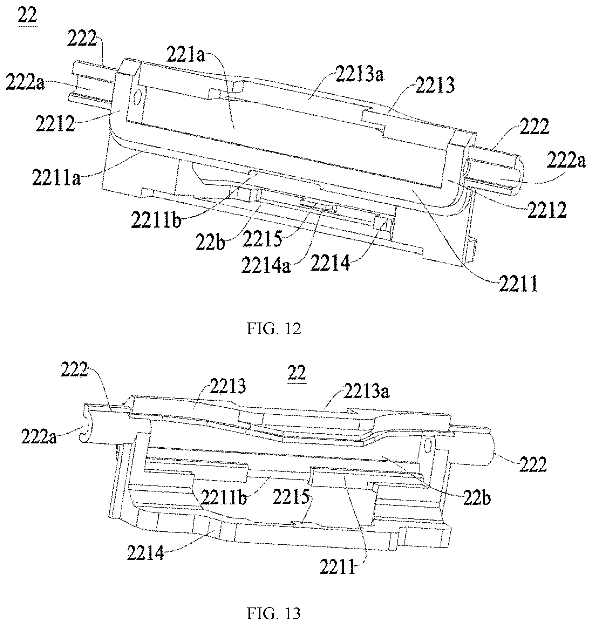

In some embodiments, the rotating mechanism provided in some embodiments of the present disclosure is adopted in a housing case, as shown in FIGS.1 to 7. The housing case provided in some embodiments of the present disclosure includes a case cover 10, a case body 20, and a rotating shaft 30. The case cover 10 includes a cover shell 11 and a connecting panel 12 connected to the cover shell 11. The case body 20 includes a shell body 21 and a mounting base 22. The shell body 21 includes a holding space 21a opened at a top and a first notch 21b defined in a side wall of the shell body 21. The holding space 21a is fluidly connected to the first notch 21b. The mounting base 22 includes a base body 221 and two protruding portions 222, one of the two protruding portions 2222 extends along one of both sides of the base body 221, and the other of the two protruding portions 222 extends along the other of both sides of the base body 221 (shown in FIGS. 8 to 10). The base body 221 defines a second notch 221a (shown in FIG. 12). Each of the protruding portions 222 defines an accommodation slot 222a (shown in FIG. 12). The mounting base 22 is connected to the first notch 21b. The protruding portions 222 are arranged in the holding space 21a. The accommodation slot 222a is opened towards the side wall of the shell body 21. The accommodation slot 222a and the side wall of the shell body 21 are enclosed together to form the first shaft hole 22a (shown in FIG. 4). The rotating shaft 30 extends through the connecting panel 12 and the base body 221 and further into the first shaft hole 22a to enable the cover shell 11 to be switched between an open position and a closed position of the shell body 21. While the cover shell 11 is in the closed position, a portion of the connecting panel 12 is arranged in the second notch 221a to close the second notch 221a, and a portion of the base body 221 and the portion of the connecting panel 12 cooperatively close the first notch 21b.

The case cover 10 may rotates around an axis of the rotating shaft 30 relative to the case body 20, so that the case cover 10 rotates around the axis of the rotating shaft 30 in a first direction, and the cover shell 11 may be arranged in the open position. In this way, items may be placed into the holding space 21a through a top opening of the holding space 21a. The case cover 10 may further rotate around the axis of the rotating shaft 30 in a second direction. In this way, the cover shell 11 is arranged in the closed position, and the cover shell 11 covers and closes the shell body 21. The portion of the base body 221 and the portion of the connecting panel 12 close the first notch 21b together, that is, the portion of the base body 221 and the portion of the connecting panel 12 are both arranged in the first notch 21b. The portion of the connecting panel 12 arranged in the first notch 21b is also arranged in the second notch 221a and closes the second notch 221a. During a rotation of the case cover 10 relative to the case body 20, the portion of the connecting panel 12 arranged in the second notch 221a moves toward an interior of the shell body 21 with avoidance of being collided with the second notch 221a and the first notch 21b, while the portion of the base body 221 arranged in the first notch 21b is fixed. The first shaft hole 22a is defined by the accommodation slot 222a and the side wall of the shell body 21 cooperatively. The rotating shaft 30 penetrates into the first shaft hole 22a through the connecting panel 12 and the base body 221, which means the rotating shaft 30 penetrates into the first shaft hole 22a through the portion of the connecting panel 12 and the base body 221 arranged in the first notch 21b. The base body 221 and the protruding portions 222 are adopted to bear the bending moment and torque together. In this way, while ensuring that the base body 221 is able to bearing enough bending moment and torque, by applying the protruding portions 222 to bear most of the force from the rotating shaft 30, the size of the portion of the base body 221 connected to the rotating shaft 30 may be configured as small as possible, which means the size of the portion of the base body 221 arranged in the first notch 21b may be configured as small as possible. In case that the cover shell 11 is in the closed position, when the user observes the case cover 10 and base body 20 from a side of the shell body 21 back from the protruding portions 222, most portions of the mounting case 22 are hidden in the shell body 21. With a small size of the portion of the base body 221 arranged in the first notch 21b, a visual effect of an integrated structure between the base body 221 and the connecting panel 12 may be achieved, avoiding a visual segmentation of the connecting panel 12 and the base body 221 caused by a situation that the portion of the base body 221 connected to the rotating shaft 30 has to be configured to be larger in order to ensure that the mounting base 22 is effectively stressed. From the perspective of industrial design, a structure in the embodiments of the present disclosure may greatly improve the aesthetics and increase the texture as well as product expression. In addition, the portion of the base body 221 arranged in the first notch 21b may be configured to limit the movement of the mounting base 22 along the axial direction of the rotating shaft 30. Further, since the accommodation slot 222a is opened towards the side wall of the shell body 21, the accommodation slot 222a and the side wall of the shell body 21 are jointly defined or enclosed to form the first axial hole 22a. In this way, each of the protruding portions 222 may be attached closely to the side wall of the shell body 21, reducing a distance between each of the protruding portions 222 and the side wall of the shell body 21, avoiding the mounting base 22 from occupying too much space in the case body 20, thereby making a structure of the case body 20 more compact.

It should be noted that the second direction is opposite to the first direction. Exemplarily, when the first direction is clockwise, the second direction is counterclockwise. When the first direction is counterclockwise, the second direction is clockwise. The inner side of the base body 221 is a side of the shell body 21 near or close to the holding space 21a. In contrast, the outer side of the base body 221 is a side of the shell body 21 away from the holding space 21a. That is, the inner side of the base body 221 and the outer side of the base body 221 refer to two opposite sides of the base body 221. For the purpose of the description of the present disclosure, the embodiments of the present disclosure define the inner side of the base body 221 and the outer side of the base body 221.

It will be understood that the rotating mechanism provided in some embodiments of the present disclosure is adopted for the housing case. The connecting panel 12 of the rotating mechanism being in the first position means the cover shell 11 of the housing case is in the open position. The connecting panel 12 in the rotating mechanism being in the second position means the cover shell 11 of the housing case is in the closed position.

In some embodiments, as shown in FIGS. 1 to 7, the housing case is an earphone charging box, and earphones are able to be stored in the holding space 21a. The earphone charging box is capable of charging the earphones. Since the case body 20 is not only adopted to accommodate the earphones but also adopted to configure a power supply, a circuit board, charging contacts, and other structures applied to charge the earphones, there are multiple components in the case body 20, causing the space in the case body 20 for holding the mounting base 22 relatively small. However, the mounting base 22 in the embodiments of the present disclosure is compact and applicable for the small space in the shell body 21 of the earphone charging box.

The earphone charging box is configured to charge matching earphones. In some embodiments, the earphone charging box includes an internal power supply for storing electricity. When the earphones are arranged in the earphone charging box, the power supply for storing electricity may charge the earphones. The earphones in the embodiments of the present disclosure may be paired and connected with intelligent terminals such as cell phones, tablets, etc. Audios may be automatically switched to the earphones when the user uses the intelligent terminals. The earphones may be Bluetooth earphones, infrared earphones, etc., and without limited herein.

In some embodiments, as shown in FIGS. 8 to 14, the base body 221 includes a supporting bar 2211 and connecting bars 2212. The supporting bar 2211 extends along the axial direction of the rotating shaft 30. The supporting bar 2211 includes the step surface 2211a formed on an end face of the supporting bar 2211 facing toward the outer side of the shell body 21. The step surface 2211a is supported on a bottom wall of the first notch 21b. each of the two connecting bars 2212 are connected to a corresponding end of the supporting bar 2211, respectively. The supporting bar 2211 and the two connecting bars 2212 cooperatively define or enclose the second notch 221a. Each of the protruding portions 222 is connected to corresponding one of the connecting bars 2212. The rotating shaft 30 extends through the connecting bars 2212 and further extends into the first shaft hole 22a. The supporting bar 2211 and the two connecting bars 2212 are connected to the first notch 21b. That is, a portion of each of the connecting bars 2212 and a portion of the supporting bar 2211 are both arranged in the first notch 21b, and further cooperate with the portion of the connecting panel 12 to close the first notch 21b. In this way, the side wall of the first notch 21b is adopted to limit the movement of the base body 221 along the axial direction of the rotating shaft 30, and the bottom wall of the first notch 21b is adopted to limit the downward movement of the base body 221, thereby improving the structural stability of the mounting base 22.

In some embodiments, as shown in FIG. 1, FIG. 7, FIG. 9, and FIG. 12, a length of the portion of each of the connecting bars 2212 (shown in FIG. 7) arranged in the first notch 21b (shown in FIG. 12) along the axial direction of the rotating shaft 30 (shown in FIG. 9) is defined as A, and 0.5 mm ≤ *A* ≤ 1.2 *mm.* For example, A may be 0.5 mm, 0.8 mm, 1.0 mm, 1.1 mm, or 1.2 mm, etc. In some embodiments, a length of the first notch 21b along the axial direction of the rotating shaft 30 is defined as B, and 1/25 ≤ *A*/*B* ≤ 1/15. For example, a ratio of A to B may be 1: 25, 1: 24, 1: 23, 1: 21, 1: 20, 1: 18, 1: 15, etc. In this way, under the condition of ensuring the force-bearing capacity of the portion of the base body 221 arranged in the first notch 21b, the length of the portion of each of the connecting bars 2212 arranged in the first notch 21b along the axial direction of the rotating shaft 30 is small enough to achieve the visual effect of nearly complete integration between the portion of each of the connecting bars 2212 arranged in the first notch 21b and the connecting panel 12, thereby further improving the aesthetics.

In some embodiments, as shown in FIGS. 8 to 11 and FIGS. 15 to 16, the connecting panel 12 includes a first panel body 121 and a second panel body 122. The first panel body 121 defines an avoidance slot 121a on each of both opposite sides along the axial direction of the rotating shaft 30. While the cover shell 11 is in the closed position, a portion of each of the connecting bars 2212 is arranged in the avoidance slot 121a. The portion of each of the connecting bars 2212, the portion of the supporting bar 2211, and the first panel body 121 cooperatively close the first notch 21b. The second panel body 122 includes a connecting portion 1221 and an extension portion 1222 extending from the connecting portion 1221 toward the case cover 10. The connecting portion 1221 is connected to a side of the first panel body 121 near or close to the holding space 12a. The extension portion 1222 is connected to the cover shell 11. The connecting portion 1221 defines a second shaft hole 1221a in the axial direction of the rotating shaft 30. The rotating shaft 30 penetrates into the second shaft hole 1221a.

The rotating shaft 30 penetrates into the second shaft hole 1221a and the first shaft hole 22a, enabling the rotating shaft 30 to connect the second panel body 122 and the protruding portions 222. In this way, the second panel body 122 is configured to bear the bending moment and torque, which means the second panel body 122 is the main force-bearing structure. Further, the extension portion 1222 is connected to the cover shell 11 in order to enhance the force-bearing capacity of the second panel body 122. Since the connecting portion 1221 is connected to the side of the first panel body 121 near the holding space 21a, the first panel body 121 may cover the rotating shaft 30, the connecting portion 1221, and other structures of the base body 221 to prevent the internal structure of the case body 20 from being observed by the user from the side of the first panel body 121 back from the holding space 21a, and the aesthetics of the housing case is improved.

In some embodiments, the extension portion 1222 is connected to the cover shell 11. In some embodiments, the extension portion 1222 is connected to the cover shell 11 by welding the extension portion 1222 on the cover shell 11. In some embodiments, the extension portion 1222 is connected to the cover shell 11 by a connection member, which may be a bolt (shown in FIG. 17 and FIG. 18). This facilitates the assembling of the connecting panel 12 with the cover shell 11 and disassembling of the connecting panel 12 from the cover shell 11.

In some embodiment, as shown in FIGS. 9, 10 and 15, the first panel body 121 includes an intermediate portion 1211 and an outer-edge portion 1212. The outer-edge portion 1212 is arranged at a periphery of the intermediate portion 1211. The outer-edge portion 1212 defines the avoidance slot 121a. The outer-edge portion 1212, the supporting bar 2211, and the two connecting bars 2212 are enclosed together to form a ring structure. The intermediate portion 1211 is arranged in the ring structure. In this way, in case that the cover shell 11 is in the closed position, when the user observes the case cover 10 and the case body 20 from the side of the shell body 21 back from or away from the holding space 21a, the outer-edge portion 1212, the supporting bar 2211, and the connecting bars 2212 present the visual effect of an integrated structure.

In some embodiments, the ring structure may be substantially circular, oval, or polygonal, etc. The polygon may be quadrilateral, pentagonal, hexagonal, etc. In some specific embodiments, the ring structure is a rectangle.

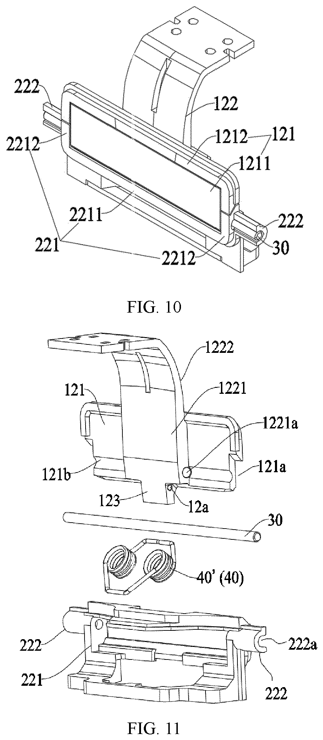

In some embodiments, as shown in FIGS. 9 and 10, on a plane on which the first panel body 121 is arranged, a projection pattern formed by the supporting bar 2211 and the two connecting bars 2212 together is symmetric with a projection pattern formed by the outer-edge portion 1212. In this way, the aesthetic appearance is further improved.

In some embodiments, as shown in FIGS. 9, 10, and 15, a contact seam between the supporting bar 2211 and the outer-edge portion 1212 is substantially flush with a contact seam between the cover shell 11 and the shell body 21. In this way, the visual effect of misalignment between the supporting bar 2211 and the outer-edge portion 1212 and the cover shell 11 and the shell body 21 is avoided, further improving aesthetics.

In some embodiments, as shown in FIGS. 9, 10, and 15, the intermediate portion 1211 defines a recessed platform on an end face of the intermediate portion 1211 back from the holding space 21a. The housing case includes a panel arranged on the recessed platform. The panel may be a display screen or an information sticker. The information sticker is a sticker containing warning information, product information, or other information. With the above design, the information may be conveyed by making full use of the end face of the intermediate portion 1211 back from the holding space 21a.

In some embodiments, the recessed platform may be circular, oval, or polygonal, etc. The polygon may be quadrilateral, pentagonal, hexagonal, etc. In some specific embodiments, the recessed platform is rectangular.

In some embodiments, as shown in FIGS. 9, 10, and 15, an end face of the outer-edge portion 1212 back from or away from the holding space 21a, an end face of the supporting bar 2211 back from the holding space 21a, and an end face of each of the connecting bars 2212 back from the holding space 21a may be configured in a first color. In this way, the outer-edge portion 1212, the supporting bar 2211, and the connecting bars 2212 present an integrated structure. In some embodiments, the end face of the intermediate portion 1211 back from the holding space 21a is configured in a second color. The first color and the second color are configured to be different from each other, so that the difference between the first color and the second color is adopted to enable the outer-edge portion 1212, the supporting bar 2211, and the connecting bars 2212 to present the visual effect of an integrated structure. In some embodiments, the first color may also be the same as the second color. In this way, the intermediate portion 1211, the outer-edge portion 1212, the supporting bar 2211, and the connecting bars 2212 together present the visual effect of an integrated structure. Exemplarily, the first color may be gold and the second color may be silver.

In some embodiments, as shown in FIGS. 9, 10 and 15, the end face of the outer-edge portion 1212 back from the holding space 21a, the end face of the supporting bar 2211 back from the holding space 21a, and the end face of each of the connecting bars 2212 back from the holding space 21a may be configured in a first texture. In this way, the outer-edge portion 1212, the supporting bar 2211 and the connecting bars 2212 present an integrated structure. Further, the end face of the intermediate portion 1211 back from the holding space 21a is configured in a second texture. The first texture and the second texture are configured to be different from each other, so that the difference between the first texture and the second texture is adopted to enable the outer-edge portion 1212, the supporting bar 2211, and the connecting bar 2212 to present the visual effect of an integrated structure. In some embodiments, the first texture may also be the same as the second texture. In this way, the intermediate portion 1211, the outer-edge portion 1212, the supporting bar 2211, and the connecting bars 2212 together present the visual effect of an integrated structure. Exemplarily, the first texture may be diagonal, tic-tac-toe, diamond-shaped, etc. The second texture may also be diagonal, tic-tac-toe, diamond-shaped, etc.

In some embodiments, as shown in FIGS. 4 and 5, the rotating shaft 30 may be a long shaft which penetrates through the first shaft hole 22a, the second shaft hole 1221a, and the base body 221. The rotating shaft 30 may also include two short shafts. One of the two short shafts extends through one first shaft hole 22a and one side of the base body 221 and further extends into the second shaft hole 1221a, while the other of the two short shafts extends through the other first shaft hole 22a and the other side of the base body 221 and further extends into the second hole 1221a. All of the above ways may be adopted to connect the connecting panel 12 and the mounting base 22 by means of the rotating shaft 30.

In other embodiments, the two short shafts may also be connected to both opposite sides of the connecting panel 12. With each of the two short shafts extending into the corresponding first shaft hole 22a, the connecting panel 12 and the mounting base 22 are pivoted to each other.

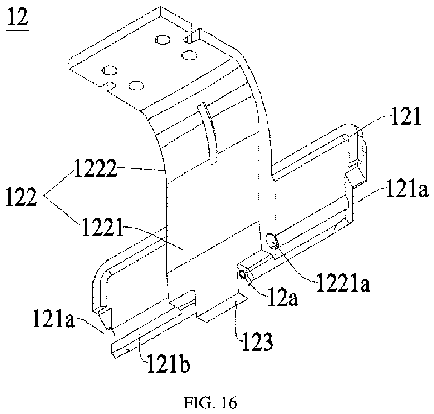

In some embodiments, as shown in FIGS.11 and 16, an end face of the first panel body 121 facing the holding space 21a defines a groove 121b. The groove 121b extends in the axial direction of the rotating shaft 30, and a portion of the rotating shaft 30 is arranged in the groove 121b. In this way, a distance between the end face of the first panel body 121 facing the holding space 21a and the rotating shaft 30 is convenient to be reduced, making the structure of the mounting base 22 more compact. In addition, during the rotation of the connecting panel 12, the cooperation of the groove 121b and the rotating shaft 30 also acts as a rotation guide, enabling a rotation process of the connecting panel 12 to be smoother and more stable.

In some embodiments, a wall surface of the groove 121b is adapted to or matches with an outer surface of the rotating shaft 30. In other words, when the rotating shaft 30 is cylindrical, the wall surface of the groove 121b may be a curved surface that matches with the outer surface of the rotating shaft 30.

In some embodiments, as shown in FIGS. 13 to 18, the second panel body 122 includes a tab 123 extending from the connecting portion 1221 toward the base body 221. The base body 221 includes a top panel 2213 connected to a top of each of the connecting bars 2212. The supporting bar 2211 and the top panel 2213 cooperatively define a rotating space 22b. The rotating shaft 30 is arranged between the top panel 2213 and the supporting bar 2211 along a height direction of the base body 221. The tab 123 is capable of rotating around the axis of the rotating shaft 30 within the rotating space 22b. The tab 123 is capable of abutting against the top panel 2213 to define and limit the open position of the cover shell 11, and the tab 123 is capable of abutting against the supporting bar 2211 to define and limit the closed position of the cover shell 11. The supporting bar 2211 is capable of stopping and contacting with or abutting against the tab 123 to define the closed position of the cover shell 11, and the top panel 2213 is capable of stopping and contacting with or abutting against the tab 123 to define the open position of the cover shell 11. In this way, it is not only possible to keep the cover shell 11 in the closed position and the open position stably, but also to define and limit an opening angle of the cover shell 11. Exemplarily, the opening angle of the cover shell 11 may be limited by controlling a tilt angle of the top panel 2213 or by defining recessed areas 2214a in different depths on the top panel 2213, for example, the opening angle may be 80°, 90°, 100°, etc., so as to facilitate taking items from the holding space 21a or placing items into the holding space 21a.

In some embodiments, as shown in FIG. 16, a dimension of the connecting portion 1221 along the axial direction of the rotating shaft 30 is less than a dimension of the first panel body 121 along the axial direction of the rotating shaft 30. The design facilitates the first panel body 121 to cover up the connecting portion 1221.

In some embodiments, as shown in FIG. 16, a dimension of the tab 123 along the axial direction of the rotating shaft 30 is less than the dimension of the first panel body 121 along the axial direction of the rotating shaft 30. The design facilitates the rotation of the tab 123 within the rotating space 22b and avoids other structures of the base body 221 from interfering with a movement of the tab 123.

In some embodiments, as shown in FIGS. 12 to 14, the top panel 2213 defines an opening slot 2213a opened toward the connecting portion 1221. While the cover shell 11 is in the closed position, a portion of the connecting portion 1221 is arranged in the opening slot 2213a. The opening slot 2213a defines an avoidance space for the connecting portion 1221 to avoid the connecting portion 1221 from interfering with the top panel 2213 during rotation, allowing the connecting panel 12 to rotate in a larger rotation range.

In some embodiments, as shown in FIGS. 12 to 14, the mounting base 22 is integrally formed as a one-piece structure. In this way, a structural strength between constituent components of the mounting base 22 is enhanced, and the processes are reduced. In some embodiments, the mounting base 22 may also be a split structure with the constituent components connected to each other, such as by welding.

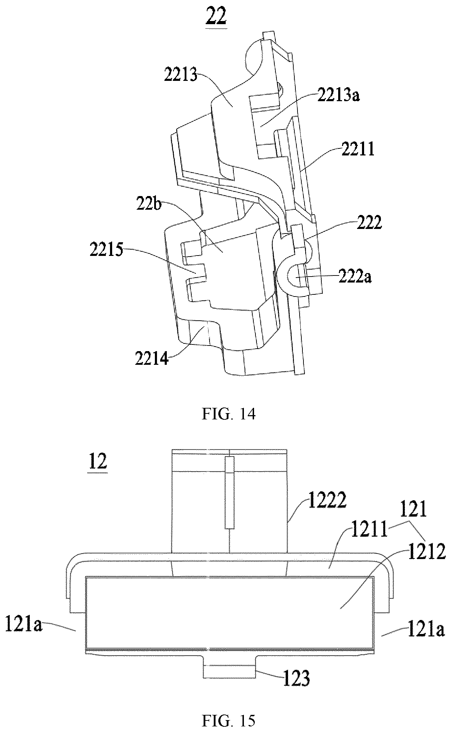

In some embodiments, as shown in FIGS. 15 to 16, the connecting panel 12 is integrally formed as a one-piece structure. In this way, a structural strength between the constituent components of the connecting panel 12 is enhanced, and the processes are reduced. In some embodiments, the connecting panel 12 may also be a split structure with the constituent components connected to each other, such as by welding.

The mounting base 22 and the connecting panel 12 provided in some embodiments of the present disclosure may be made of metal materials in order to increase the texture, improve the aesthetics, and further increase the product expression. In some embodiments, the mounting base 22 and the connecting panel 12 may also be made of plastic in order to reduce weight. The embodiments of the present disclosure do not limit the materials of the mounting base 22 and the connecting panel 12.

In some embodiments, as shown in FIGS. 1 and 2, while the cover shell 11 is in the closed position, an outer surface of the shell body 21, a surface of the base body 221 arranged in the first notch 21b, and a surface of the connecting panel 12 cooperatively form a smooth surface. That is, the base body 221 arranged in the first notch 21b and the connecting panel 12 arranged in the first notch 21b may not protrude out of nor be lower than the outer surface of the shell body 21. The design not only improves the aesthetics, but also facilitates the user to have a better touching feeling when gripping the shell body 21 without feeling sharp corners or protruding structures.

In some embodiments, as shown in FIGS. 4 to 5 and FIGS. 17 to 20, the housing case includes an elastic member 40. The cover shell 11 has a critical position. The critical position is arranged between the closed position and the open position. The elastic member 40 is loaded between the mounting base 22 and the connecting panel 12. That is, for the elastic member 40, both the mounting base 22 and the connecting panel 12 are loaded by the elastic member 40. While the cover shell 11 is arranged in the critical position, the elastic member 40 imposes a zero torque on the case cover 10. While the cover shell 11 deviates to either side of the critical position along the direction of rotation, the elastic member 40 imposes a driving torque on the case cover 10 to drive the cover shell 11 to the closed position or the open position.

It should be noted that the expressions "while the cover shell 11 deviates to either side of the critical position along the direction of rotation, the elastic member 40 imposes a driving torque on the case cover 10 to drive the cover shell 11 to the closed position or the open position" includes the following two cases. The first case is: while the cover shell 11 deviates from the critical position and is located on a first side of the critical position along the direction of rotation, the elastic member 40 drives the cover shell 11 to the open position. The second case is: while the cover shell 11 deviates from the critical position and is located on a second side of the critical position along the direction of rotation, the elastic member 40 drives the cover shell 11 to the closed position.

In some embodiments, as shown in FIG. 19, the elastic member 40 applies a force F1 to the case cover 10, and the force F1 generates a first torque W1 around the axis of the rotating shaft 30 (simplified as the point O shown in FIG. 19). The first torque W1 is the driving torque described above. The cover shell 11 moves to the closed position and remains in the closed position under the effect of the first torque W1. That is, when there is no external force acting on the case cover 10 or when the external force acting on the case cover 10 is not sufficient to overcome the resistance formed by the first torque W1, the cover shell 11 may not deviate from the current closed position.

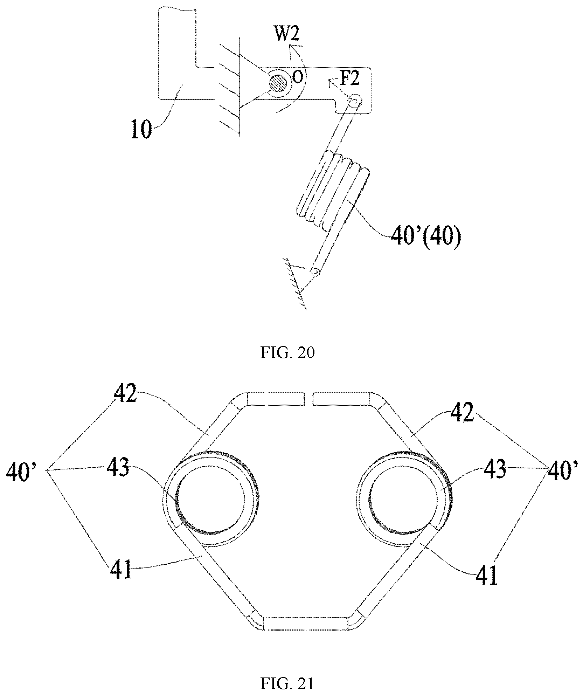

As shown in FIG. 20, the elastic member 40 applies a force F2 to the case cover 10, and the force F2 generates a second torque W2 around the axis of the rotating shaft 30 (simplified as the point O in FIG. 20). The second torque W2 is the driving torque described above. The first torque W1 is in an opposite direction to the second torque W2. The cover shell 11 moves to the open position and remains in the open position under the effect of the second torque W2. That is, when there is no external force acting on the case cover 10 or when the external force acting on the case cover 10 is not sufficient to overcome the resistance formed by the second torque W2, the cover shell 11 may not deviate from the current open position.

When the cover shell 11 needs to be switched from the closed position to the open position, the user may slowly rotate the case cover 10, and the force applied by the user needs to be able to overcome the resistance provided by the first torque W1 at this time. That is, the first torque W1 is a resistance torque in this case. When an angle of rotation of the cover shell 11 is able to enable the cover shell 11 to cross the above-mentioned critical position, the elastic member 40 applies the reverse second torque W2 to the case cover 10. The direction of the second torque W2 is the same as the direction of rotation. The second torque W2 is the driving torque in this case. Even if being released by the user, the cover shell 11 may automatically rotate under the effect of the elastic member 40 until the cover shell 11 reaches the open position, and stably remains in the open position under the effect of the second torque W2.

When the cover shell 11 needs to be switched from the open position to the closed position, the user may slowly rotate the case cover 10 in a reverse direction, and the force applied by the user needs to be able to overcome the resistance provided by the second torque W2 at this time. That is, the second torque W2 is a resistance torque in this case. When the angle of rotation of the cover shell 11 is able to enable the cover shell 11 to cross the above-mentioned critical position, the elastic member 40 applies the reverse first torque W1 to the case cover 10. Even if being released by the user, the cover shell 11 may automatically rotate under the effect of the elastic member 40 until the cover shell 11 reaches the closed position, and stably remains in the closed position under the effect of the first torque W1.

In other words, within a certain rotation range, the cover shell 11 has functions of automatic closing and automatic opening, and the closing process and the opening process have a damping feel, which is conducive to enhancing the users' experience.

In some embodiments, as shown in FIG. 21, the elastic member 40 includes at least one torsion spring 40'. The torsion spring 40' includes a first leg or outrigger 41, a second leg or outrigger 42, and a spiral body 43. The first leg 41 and the second leg 42 are connected to opposite sides of the spiral body 43 in an axial direction of the spiral body 43. The first leg 41 is connected to the base body 221, and the second leg 42 is connected to the connecting panel 12 to drive the cover shell 11 to rotate around the axis of the rotating shaft 30. In other words, the second leg 42 of the torsion spring 40' is not only able to drive the cover shell 11 to rotate around the axis of the rotating shaft 30 in the first direction, but also able to drive the cover shell 11 to rotate around the axis of the rotating shaft 30 in the second direction. The first direction is opposite to the second direction. The angle between the axis of the spiral body 43 and the axis of the rotating shaft 30 is configured in a range from 45° to 90°. In this way, the space occupied by the torsion spring 40' along a direction substantially perpendicular to the axis of the rotating shaft 30 may be reduced, making the housing case compact.

In some embodiments, the spiral body 43 is disposed in suspension, that is, the spiral body 43 may move with the second leg 42.

It is understood that the torsion spring 40' may form the first torque W1 described above in a compression state or a tensile state. Further, the torsion spring 40' may form the second torque W2 described above in a compression state or a tensile state, which is not limited herein.

During the rotating of the cover shell 11, a distance between an end of the first leg 41 and an end of the second leg 42 changes, which causes a screw pitch of the spiral body 43 to change. That is, the spiral body 43 has an elastic deformation along the axial direction of the spiral body 43, so that the spiral body 43 obtains a rebound force along its axial direction. The rebound force is applied to the case cover 10 to form the above-mentioned forces F1 and F2. Since the above-mentioned forces F1 and F2 are generally in the axial direction of the spiral body 43, the directions of the forces are relatively certain. Therefore, in a designing process of the torsion spring 40', a diameter, material, a size of the screw pitch, etc. of the spiral body 43 are easily designed.

In some specific embodiments, the axis of the spiral body 43 is substantially perpendicular to the axis of the rotating shaft 30. That is, the angle between the axis of the spiral body 43 and the axis of the rotating shaft 30 is approximately 90°. Since the torsion spring 40' relies on the force formed by the elastic deformation of the spiral body 43 in the axial direction, even if the maximum distance between the end of the first leg 41 and the end of the second leg 42 is configured to be relatively small, the torsion spring 40' is able to apply a large elastic force on the case cover 10. Therefore, the torsion spring 40' has a relatively small size in the height direction (top-to-bottom direction) and the width direction (left-to-right direction) shown in FIG. 17, thereby making the housing case more compact.

It can be understood that the number of torsion springs 40' may be one or plurality. The "plurality" includes two and more. It is to be noted that in embodiments where there is a plurality of torsion springs 40', the plurality of torsion springs 40' may be spaced apart from each other without interfering with each other, or may be connected to each other.

It should be noted that in an embodiment with only one torsion spring 40', both the first leg 41 and the second leg 42 mentioned above create component forces in the axial direction of the rotating shaft 30, and both of component forces have the same direction. The component forces may force the case cover 10 to move in the axial direction of the rotating shaft 30, creating a sense of wobbling and unstable for users. In this case, in some embodiments, as shown in FIGS. 4, 5 and 21, the number of torsion springs 40' is two. The end of the first leg 41 of one torsion spring 40' is fixedly connected to the end of the first leg of the other torsion spring 40'. The axis of the spiral body 43 of one torsion spring 40' is substantially parallel to the axis of the spiral body 43 of the other torsion spring 40'. That is, the two torsion springs 40' form a structure of a double torsion spring. On the one hand, the double torsion spring may have a high structural strength, a large torque, a good stability, as well as a long lifetime, may further be difficult to deform when being applied with large forces, and may be able to improve the reliability and durability of the housing case. On the other hand, directions of the two component forces created by the double torsion spring in the axial direction of the rotating shaft 30 are reverse, and are able to cancel each other out, thereby enabling the case cover 10 to be centered at the middle position along the axis of the rotating shaft 30. In some embodiments, due to manufacturing errors, assembly errors, etc., a certain axial clearance exists between the case cover 10 and the mounting base 22 in the axial direction of the rotating shaft 30. The axial clearance ensures that the case cover 10 and the mounting base 22 may be properly assembled with each other without providing a large dry friction between the case cover 10 and the mounting base 22. Due to the existence of this axial clearance, the case cover 10 is possible to be displaced or moved along the axial direction. Under the effects of the above two torsion springs 40', when the case cover 10 is arranged in the middle position, forces of the two torsion springs 40' along the axial direction are balance. When the case cover 10 moves by a small distance to the left side shown in FIG. 21, the torsion spring 40' on the right side may force the box cover 10 move to the right. When the case cover 10 moves by a small distance to the right side shown in FIG. 21, the torsion spring 40' on the left side may force the case cover 10 to move to the left, and so on. The case cover 10 is stabilized in a middle balance position. In this way, even if the case cover 10 has a large axial clearance on both sides of the case cover 10 along the axial direction, the case cover 10 may not be displaced along the axial direction, which may reduce requirements of a manufacturing accuracy and an assembly accuracy of the case cover 10 and the mounting base 22, thereby facilitating reducing product costs.

In some embodiments, in a specific embodiment of the present disclosure, as further shown in FIG. 21, both the first leg 41 and the second leg 42 have bent structures. The two torsion springs 40' generally constitute a regular hexagonal structure.

In some embodiments, as shown in FIG. 11 and FIG. 16, the connecting panel 12 defines two insertion holes 12a, one of the insertion holes 12a is disposed on one of both opposite sides of the connecting panel 12 along the axis of the rotating shaft 30, and the other of the insertion holes 12a is disposed on the other side of both opposite sides of the connecting panel 12 along the axis of the rotating shaft 30. The end of the second leg 42 of one of the torsion springs 40' is arranged in one of the insertion holes 12a, while the end of the second leg 42 of the other torsion spring 40' is arranged in the other of insertion hole 12a. During the rotation of the case cover 10 around the axis of the rotating shaft 30, the end of the second leg 42 of the torsion spring 40' may be rotated within the insertion hole 12a to improve the force-bearing conditions of the torsion spring 40' itself.

In some specific embodiments, as shown in FIG. 11 and FIG. 16, the two insertion holes 12a are arranged in a same line. The line connecting the two insertion holes 12a is substantially parallel to the axis of the rotating shaft 30.

In some embodiments, as shown in FIG. 11 and FIG. 16, the two insertion holes 12a are formed on opposite sides of the tab 123 in the axial direction of the rotating shaft 30, respectively. The dimension of the tab 123 along the axial direction of the rotating shaft 30 is less than the dimension of the first panel body 121 along the axial direction of the rotating shaft 30. In this way, the distance between the ends of the second legs 42 of the two torsion springs 40' is relatively small, thereby facilitating the installation of the torsion springs 40'. Further, as shown in FIGS. 12 and 13, an avoidance notch 2211b is defined at a position of the supporting bar 2211 at which the supporting bar 2211 abuts against the tab 123. When the cover shell 11 is in the closed position, a portion of the tab 123 is arranged in the avoidance notch 2211b. In this way, not only the tab 123 and the supporting bar 2211 may be effectively cooperated with each other, but also a thickness of the tab 123 along the direction substantially perpendicular to the axial direction of the rotating shaft 30 is relatively great, which facilitates the configuring of the insertion hole 12a in the tab 123 and avoids a hole wall of the insertion hole 12a being too thin.

In some embodiments, as shown in FIGS. 12 and 13, the base body 221 includes a bottom panel 2214 connected to a bottom end of each of the connecting bars 2212. A top surface of the bottom panel 2214 defines a recessed area 2214a. The base body 221 further includes a stopper 2215 arranged on a top side of the recessed area 2214a. The stopper 2215 and a surface of the recessed area 2214a define a limiting slot together. The first leg 41 of the torsion spring 40 is movably arranged in the limiting slot. In other words, in the embodiments, when assembling, it is only necessary to snap or engage the first leg 41 of the torsion spring 40' into the limiting slot, and the stopper 2215 may prevent the first leg 41 from detaching from the bottom panel 2214 from the top side of the recessed area 2214a.

In some embodiments, as shown in FIG. 7, an inner surface of the shell body 21 defines an insertion slot 20a. The base body 221 is able to be inserted into the insertion slot 20a from the top opening of the holding space 21a. The base body 221 is supported on a bottom wall of the insertion slot 20a. During the assembly, the base body 221 may be first inserted downward from the top opening of the holding space 21a into the insertion slot 20a. The insertion slot 20a may limit not only the downward movement of the base body 221, but also the movements of the base body 221 along and perpendicular to the axial direction of the rotating shaft 30, which means the insertion slot 20a limits the movements of the base body 221 in the down, front, back, left, and right directions shown in the FIG. 7. In this way, the fixed installation of the base body 221 may be achieved without the use of fastening methods such as screws and gluing, and further without the requirement of additional fasteners. Therefore, the method implemented in the fixed installation is reliable and time-saving.

In some embodiments, as shown in FIGS. 3 and 5, the housing case further includes a storage panel 50, and the storage panel 50 defines a storage slot 50a. The storage cover 50 is pressed against the side of the base body 221 facing the case cover 10 to fix the base body 221 in the insertion slot 20a. After the base body 221 is inserted into the insertion slot 20a, the cover 50 is pressed against the side of the base body 221 facing the case cover 10, and the storage panel 50 is configured to fix the base body 221 in the insertion slot 20a. That is, the cover 50 may limit an upward movement of the base body 221 and prevent the base body 221 from coming out of the top side of the insertion slot 20a. When the storage case is the earphone charging box, the earphones are arranged in the storage slot 50a.

In some embodiments, as shown in FIG. 7, the case body 20 includes a first protrusion bar 23 and two second protrusion bars 24 protruding from the inner surface of the shell body 21. The first protrusion bar 23 extends in a direction substantially parallel to the axis of the rotating shaft 30. The two second protrusion bars 24 extend from both opposite ends of the first protrusion bar 23 toward the case cover 21. An end of one of the second protrusion bars 24 away from the shell body 21 is bent toward a side of the other of the second protrusion bars 24. The two second protrusion bars 24, the first protrusion bar 23, and the inner surface of the shell body 21 cooperatively defines the insertion slot 20a. The base body 221 may be supported on the first protrusion bar 23. In this way, it may be quickly and easily manufactured to form the insertion slot 20a.

The of protection of this disclosure shall be subject to the scope of protection of the appended claims.

## Claims

1. A rotating mechanism, **characterized by** comprising:
a connecting panel (12), having a first position and a second position;
a mounting base (22), comprising a base body (221) and two protruding portions (222), one of the two protruding portions (222) extending along one of both sides of the base body (221), and the other of the two protruding portions (222) extending along the other of both sides of the base body (221), wherein the base body (221) defines a notch (221a), the notch (221a) is defined between the two protruding portions (222), each of the protruding portions (222) define an accommodation slot (222a), and the accommodation slot (222a) is opened toward an outer side of the base body (221); when the connecting panel (12) is arranged in the first position, a portion of the connecting panel (12) is arranged on an inner side of the base body (221); and when the connecting panel (12) is arranged in the second position, the portion of the connecting panel (12) is arranged in the notch (221a) and closes the notch (221a); and
a rotating shaft (30), extending through the connecting panel (12) and the base body (221) and further extending into the accommodation slot (222a) to enable the connecting panel (12) to be switched between the first position and the second position.

2. The rotating mechanism according to claim 1, wherein
the base body (221) comprises a supporting bar (2211) and two connecting bars (2212), the supporting bar (2211) extends in an axial direction of the rotating shaft (30), one of the connecting bars (2212) is connected to one of the two opposite ends of the supporting bar (2211), and the other of the connecting bars (2212) is connected to the other of two opposite ends of the supporting bar (2211); wherein the supporting bar (2211) and the connecting bars (2212) cooperatively define the notch (221a), each of the protruding portions (222) is connected to a corresponding one of the connecting bars (2212), and the rotating shaft (30) extends through the connecting bars (2212) and further extends into the accommodation slot (222a); and
wherein the connecting panel (12) comprises a first panel body (121), the first panel body (121) comprises an intermediate portion (1211) and an outer-edge portion (1212), the outer-edge portion (1212) is arranged at a periphery of the intermediate portion (1211), and the outer-edge portion (1212) defines an avoidance slot (121a) on each of both opposite sides along the axial direction of the rotating shaft (30); when the connecting panel (12) is arranged in the second position, a portion of each of the connecting bars (2212) is arranged in the avoidance slot (121a), the outer-edge portion (1212), the supporting bar (2211), and the two connecting bars (2212) are enclosed together to define a ring structure, and the intermediate portion (1211) is arranged in the ring structure.

3. The rotating mechanism according to claim 2, wherein the connecting panel (12) further comprises a second panel body (122), the second panel body (122) is connected to an inner end face of the first panel body (121), the second panel body (122) defines a shaft hole (1221a) arranged along the axial direction of the rotating shaft (30), and the rotating shaft (30) penetrates into the shaft hole (1221a).

4. A housing case, comprising:
a cover shell (11);
a shell body (21), wherein the shell body (21) defines a holding space (21a) having a top opening and another notch (21b) defined in a side wall of the shell body (21), and the holding space (21a) is fluidly connected to the another notch (21b); and
the rotating mechanism according to claim 1, wherein the connecting panel (12) is connected to the cover shell (11), the mounting base (22) is connected to the another notch (21b), the protruding portions (222) are arranged in the holding space (21a), the accommodation slot (222a) is opened towards the side wall of the shell body (21), and the accommodation slot (222a) and the side wall of the shell body (21) cooperatively define another shaft hole (22a); and
wherein the rotating shaft (30) extends through the connecting panel (12) and the base body (221) and further extends into the another shaft hole (22a) to enable the cover shell (11) to be switched between an open position and a closed position at which the shell body (21) is closed; when the cover shell (11) is in the closed position, the connecting panel (12) is in the second position, a portion of the connecting panel (12) is arranged in the notch (221a) to close the notch (221a), and a portion of the base body (221) and the portion of the connecting panel (12) cooperatively close the another notch (21b).

5. The housing case according to claim 4, wherein the mounting base (22) comprises:
a supporting bar (2211), extending in an axial direction of the rotating shaft (30), wherein the supporting bar (2211) comprises a step surface (2211a) formed on an end face of the supporting bar (2211) facing towards an outer side of the shell body (21), and the step surface (2211a) is supported on a bottom wall of the another notch (21b); and
two connecting bars (2212), wherein one of the connecting bars (2212) is connected to one of two opposite ends of the supporting bar (2211), the other of the connecting bars (2212) is connected to the other of the two opposite ends of the supporting bar (2211), and the supporting bar (2211) and the two connecting bars (2212) cooperatively define the notch (221a); and
wherein each of the protruding portions (222) is connected to a corresponding one of the connecting bars (2212), the rotating shaft (30) extends through the connecting bars (2212) and into the another shaft hole (22a), and the supporting bar (2211) and the two connecting bars (2212) are connected to the another notch (21b).

6. The housing case according to claim 5, wherein the connecting panel (12) comprises:
a first panel body (121), defining an avoidance slot (121a) on each of both opposite sides of the first panel body (121) along the axial direction of the rotating shaft (30); wherein when the cover shell (11) is in the closed position, a portion of each of the connecting bars (2212) is arranged in the avoidance slot (121a) , and the portion of each of the connecting bars (2212), a portion of the supporting bar (2211), and the first panel body (121) cooperatively enclose the another notch (21b); and
a second panel body (122), comprising a connecting portion (1221) and an extension portion (1222) extending from the connecting portion (1221) toward the case cover, wherein the connecting portion (1221) is connected to a side of the first panel body (121) near the holding space (21a), the extension portion (1222) is connected to the cover shell (11), the connecting portion (1221) defines a shaft hole (1221a) disposed in the axial direction of the rotating shaft (30), and the rotating shaft (30) penetrates into the shaft hole (1221a).

7. The housing case according to claim 6, wherein the first panel body (121) comprises an intermediate portion (1211) and an outer-edge portion (1212), the outer-edge portion (1212) is arranged at a periphery of the intermediate portion (1211), and the avoidance slot (121a) is defined in the outer-edge portion (1212); the outer-edge portion (1212), the supporting bar (2211), and the connecting bars (2212) are enclosed together to form a ring structure, and the intermediate portion (1211) is arranged in the ring structure.

8. The housing case according to claim 6, wherein the first panel body (121) defines a groove (121b) on an end face facing toward the holding space (21a), the groove (121b) extends in the axial direction of the rotating shaft (30), and a portion of the rotating shaft (30) is arranged in the groove (121b).

9. The housing case according to claim 6, wherein the second panel body (122) comprises a tab (123) extending from the connecting portion (1221) toward the base body (221), the base body (221) comprises a top panel (2213) connected to a top of each of the connecting bars (2212), and the supporting bar (2211) and the top panel (2213) cooperatively define a rotating space (22b);
the rotating shaft (30) is arranged between the top panel (2213) and the supporting bar (2211) along a height direction of the base body (221), the tab (123) is capable of rotating around an axis of the rotating shaft (30) within the rotating space (22b), capable of abutting against the top panel (2213) to limit the open position of the cover shell (11), and capable of abutting against the supporting bar (2211) to limit the closed position of the cover shell (11).

10. The housing case according to claim 9, wherein at least one of the connecting portion (1221) and the tab (123) has a dimension along the axial direction of the rotating shaft (30) less than a dimension of the first panel body (121) along the axial direction of the rotating shaft (30).

11. The housing case according to claim 9, wherein the top panel (2213) defines an opening slot (2213a) opened towards the connecting portion (1221); when the cover shell (11) is in the closed position, a portion of the connecting portion (1221) is arranged within the opening slot (2213a).

12. The housing case according to any one of claims 4 to 11, wherein the housing case comprises an elastic member (40), the cover shell (11) has a critical position arranged between the closed position and the open position, and the elastic member (40) is loaded between the mounting base (22) and the connecting panel (12); when the cover shell (11) is arranged in the critical position, a torque exerted by the elastic member (40) on the case cover is zero; and when the cover shell (11) deviates to either side of the critical position along a direction of rotation, the elastic member (40) exerts a driving torque on the case cover to drive the cover shell (11) to move to the closed position or the open position.

13. The housing case according to claim 12, wherein the elastic member (40) comprises one or more torsion springs (40'), and each of the one or more torsion springs (40') comprises a first leg (41), a second leg (42), and a spiral body (43); the first leg (41) and the second leg (42) are connected to opposite sides of the spiral body (43) in an axial direction, the first leg (41) is connected to the base body (221), the second leg (42) is connected to the connecting panel (12) to drive the cover shell (11) to rotate around an axis of the rotating shaft (30), and an angle between an axis of the spiral body (43) and the axis of rotating shaft (30) is in a range from 45° to 90°.

14. The housing case according to claim 13, wherein the number of the one or more torsion springs (40') is two, an end of the first leg (41) of one of the torsion springs (40') is fixedly connected to an end of the first leg (41) of the other of the torsion springs (40'), and the axis of the spiral body (43) of one of the torsion springs (40') is substantially parallel to the axis of the spiral body (43) of the other of the torsion springs (40'); and wherein the connecting panel (12) defines insertion holes (12a) on both opposite sides of the connecting panel (12) along an axial direction of the rotating shaft (30), an end of the second leg (42) of one of the torsion springs (40') is arranged in one of the insertion holes (12a), and an end of the second leg (42) of the other of the torsion springs (40') is arranged in the other of the insertion holes (12a).

15. The housing case according to any one of claims 4 to 11, wherein the shell body (21) defines an insertion slot (20a) on an inner surface of the housing, the base body (221) is capable of being inserted into the insertion slot (20a) from the top opening of the holding space (21a), and the base body (221) is supported on a bottom wall of the insertion slot (20a); and wherein the case body comprises a first protrusion bar (23) and two second protrusion bars (24), the first protrusion bar (23) and the two second protrusion bars (24) protrude from the inner surface of the shell body (21), the first protrusion bar (23) extends in a direction substantially parallel to an axial direction of the rotating shaft (30), and each of the two second protrusion bars (24) extends from a corresponding one of two opposite ends of the first protrusion bar (23) toward the case cover; an end of one of the second protrusion bars (24) away from the shell body (21) is bent toward a side of the other of the second protrusion bars (24), the two second protrusion bars (24), the first protrusion bar (23), and the inner surface of the shell body (21) cooperatively define the insertion slot (20a), and the base body (221) is supported on the first protrusion bar (23).

## Patentansprüche

1. Drehmechanismus, **dadurch gekennzeichnet, dass** er Folgendes umfasst:
eine Verbindungsplatte (12) mit einer ersten Position und einer zweiten Position,
eine Montagebasis (22), die einen Basishauptteil (221) und zwei hervorstehende Abschnitte (222) umfasst, wobei sich einer der zwei hervorstehenden Abschnitte (222) entlang einer der beiden Seiten des Basishauptteils (221) erstreckt und sich der andere der zwei hervorstehenden Abschnitte (222) entlang der anderen der beiden Seiten des Basishauptteils (221) erstreckt, wobei der Basishauptteil (221) eine Einbuchtung (221a) definiert, wobei die Einbuchtung (221a) zwischen den zwei hervorstehenden Abschnitten (222) definiert ist, jeder der hervorstehenden Abschnitte (222) einen Unterbringungsschlitz (222a) definiert und der Unterbringungsschlitz (222a) zu einer Außenseite des Basishauptteils (221) offen ist, ein Abschnitt der Verbindungsplatte (12) an einer Innenseite des Basishauptteils (221) angeordnet ist, wenn die Verbindungsplatte (12) in der ersten Position angeordnet ist, und der Abschnitt der Verbindungsplatte (12) in der Einbuchtung (221a) angeordnet ist und die Einbuchtung (221a) verschließt, wenn die Verbindungsplatte (12) in der zweiten Position angeordnet ist, und
eine Drehwelle (30), die sich durch die Verbindungsplatte (12) und den Basishauptteil (221) erstreckt und sich ferner in den Unterbringungsschlitz (222a) erstreckt, um das Wechseln der Verbindungsplatte (12) zwischen der ersten Position und der zweiten Position zu ermöglichen.

2. Drehmechanismus nach Anspruch 1, wobei
der Basishauptteil (221) einen Stützstab (2211) und zwei Verbindungsstäbe (2212) umfasst, wobei sich der Stützstab (2211) in einer axialen Richtung der Drehwelle (30) erstreckt, einer der Verbindungsstäbe (2212) mit einem der zwei gegenüberliegenden Enden des Stützstabes (2211) verbunden ist und der andere der Verbindungsstäbe (2212) mit dem anderen der zwei gegenüberliegenden Enden des Stützstabes (2211) verbunden ist, wobei der Stützstab (2211) und die Verbindungsstäbe (2212) zusammenwirkend die Einbuchtung (221a) definieren, jeder der hervorstehenden Abschnitte (222) mit einem entsprechenden der Verbindungsstäbe (2212) verbunden ist und sich die Drehwelle (30) durch die Verbindungsstäbe (2212) erstreckt und sich ferner in den Unterbringungsschlitz (222a) erstreckt, und
wobei die Verbindungsplatte (12) einen ersten Plattenhauptteil (121) umfasst, wobei der erste Plattenhauptteil (121) einen Zwischenabschnitt (1211) und einen Außenrandabschnitt (1212) umfasst, der Außenrandabschnitt (1212) an einem Außenumfang des Zwischenabschnitts (1211) angeordnet ist und der Außenrandabschnitt (1212) einen Vermeidungsschlitz (121a) an jeder der beiden gegenüberliegenden Seiten entlang der axialen Richtung der Drehwelle (30) definiert, wobei ein Abschnitt von jedem der Verbindungsstäbe (2212) in dem Vermeidungsschlitz (121a) angeordnet ist, der Außenrandabschnitt (1212), der Stützstab (2211) und die zwei Verbindungsstäbe (2212) zusammengeschlossen sind, um eine Ringstruktur zu definieren, und der Zwischenabschnitt (1211) in der Ringstruktur angeordnet ist, wenn die Verbindungsplatte (12) in der zweiten Position angeordnet ist.

3. Drehmechanismus nach Anspruch 2, wobei die Verbindungsplatte (12) ferner einen zweiten Plattenhauptteil (122) umfasst, der zweite Plattenhauptteil (122) mit einer inneren Endfläche des ersten Plattenhauptteils (121) verbunden ist, der zweite Plattenhauptteil (122) eine Wellenöffnung (1221a) definiert, die entlang der axialen Richtung der Drehwelle (30) angeordnet ist und die Drehwelle (30) in die Wellenöffnung (1221a) eindringt.

4. Gehäuse, Folgendes umfassend:
eine Abdeckhülle (11),
einen Hüllenhauptteil (21), wobei der Hüllenhauptteil (21) eine Halteraum (21a) definiert, der eine obere Öffnung und eine weitere Einbuchtung (21b) aufweist, die in einer Seitenwand des Hüllenhauptteils (21) definiert ist, und der Halteraum (21a) in Fluidverbindung mit der weiteren Einbuchtung (21b) steht, und
den Drehmechanismus nach Anspruch 1, wobei die Verbindungsplatte (12) mit der Abdeckhülle (11) verbunden ist, die Montagebasis (22) mit der weiteren Einbuchtung (21b) verbunden ist, die hervorstehenden Abschnitte (222) in dem Halteraum (21a) angeordnet sind, der Unterbringungsschlitz (222a) hin zur Seitenwand des Hüllenhauptteils (21) offen ist und der Unterbringungsschlitz (222a) und die Seitenwand des Hüllenhauptteils (21) zusammenwirkend eine weitere Wellenöffnung (22a) definieren, und
wobei sich die Drehwelle (30) durch die Verbindungsplatte (12) und den Basishauptteil (221) hindurch erstreckt und sich ferner in die weitere Wellenöffnung (22a) erstreckt, um es der Abdeckhülle (11) zu ermöglichen, zwischen einer offenen Position und einer geschlossenen Position, in der der Hüllenhauptteil (21) geschlossen ist, zu wechseln, wobei sich die Verbindungsplatte (12) in der zweiten Position befindet, ein Abschnitt der Verbindungsplatte (12) in der Einbuchtung (221a) angeordnet ist, um die Einbuchtung (221a) zu schließen, und ein Abschnitt des Basishauptteils (221) und der Abschnitt der Verbindungsplatte (12) zusammenwirkend die weitere Einbuchtung (21b) schließen, wenn sich die Abdeckhülle (11) in der geschlossenen Position befindet.

5. Gehäuse nach Anspruch 4, wobei die Montagebasis (22) Folgendes umfasst:
einen Stützstab (2211), der sich in einer axialen Richtung der Drehwelle (30) erstreckt, wobei der Stützstab (2211) eine abgestufte Fläche (2211a) umfasst, die an einer Endfläche des Stützstabes (2211) gebildet ist, die hin zu einer Außenseite des Hüllenhauptteils (21) weist, und die abgestufte Fläche (2211a) auf eine untere Wand der weiteren Einbuchtung (21b) gestützt ist, und
zwei Verbindungsstäbe (2212), wobei einer der Verbindungsstäbe (2212) mit einem der zwei gegenüberliegenden Enden des Stützstabes (2211) verbunden ist, der andere der Verbindungsstäbe (2212) mit dem anderen der zwei gegenüberliegenden Enden des Stützstabes (2211) verbunden ist und der Stützstab (2211) und die zwei Verbindungsstäbe (2212) zusammenwirkend die Einbuchtung (221a) definieren, und
wobei jeder der hervorstehenden Abschnitte (222) mit einem entsprechenden der Verbindungsstäbe (2212) verbunden ist, sich die Drehwelle (30) durch die Verbindungsstäbe (2212) und in die weitere Wellenöffnung (22a) erstreckt und der Stützstab (2211) und die zwei Verbindungsstäbe (2212) mit der weiteren Einbuchtung (21b) verbunden sind.

6. Gehäuse nach Anspruch 5, wobei die Verbindungsplatte (12) Folgendes umfasst:
einen ersten Plattenhauptteil (121), der an jeder von beiden gegenüberliegenden Seiten des ersten Plattenhauptteils (121) entlang der axialen Richtung der Drehwelle (30) einen Vermeidungsschlitz (121a) definiert, wobei ein Abschnitt von jedem der Verbindungsstäbe (2212) in dem Vermeidungsschlitz (121a) angeordnet ist und der Abschnitt von jedem der Verbindungsstäbe (2212), ein Abschnitt des Stützstabes (2211) und der erste Plattenhauptteil (121) zusammenwirkend die weitere Einbuchtung (21b) umschließen, wenn sich die Abdeckhülle (11) in der geschlossenen Position befindet, und
einen zweiten Plattenhauptteil (122), der einen Verbindungsabschnitt (1221) und einen Erweiterungsabschnitt (1222) umfasst, der sich von dem Verbindungsabschnitt (1221) hin zu der Gehäuseabdeckung erstreckt, wobei der Verbindungsabschnitt (1221) mit einer Seite des ersten Plattenhauptteils (121) nahe dem Halteraum (21a) verbunden ist, der Erweiterungsabschnitt (1222) mit der Abdeckhülle (11) verbunden ist, der Verbindungsabschnitt (1221) eine Wellenöffnung (1221a) definiert, di in der axialen Richtung der Drehwelle (30) angeordnet ist, und die Drehwelle (30) in die Wellenöffnung (1221a) eindringt.

7. Gehäuse nach Anspruch 6, wobei der erste Plattenhauptteil (121) einen Zwischenabschnitt (1211) und einen Außenrandabschnitt (1212) umfasst, der Außenrandabschnitt (1212) an einem Außenumfang des Zwischenabschnitts (1211) angeordnet ist und der Vermeidungsschlitz (121a) in dem Außenrandabschnitt (1212) definiert ist, wobei der Außenrandabschnitt (1212), der Stützstab (2211) und die Verbindungsstäbe (2212) zusammengeschlossen sind, um eine Ringstruktur zu bilden, und der Zwischenabschnitt (1211) in der Ringstruktur angeordnet ist.

8. Gehäuse nach Anspruch 6, wobei der erste Plattenhauptteil (121) eine Rille (121b) an einer Endfläche, die hin zum Halteraum (21a) weist, definiert, sich die Rille (121b) in der axialen Richtung der Drehwelle (30) erstreckt und ein Abschnitt der Drehwelle (30) in der Rille (121b) angeordnet ist.

9. Gehäuse nach Anspruch 6, wobei der zweite Plattenkörper (122) eine Nase (123) umfasst, die sich von dem Verbindungsabschnitt (1221) hin zu dem Basishauptteil (221) erstreckt, der Basishauptteil (221) eine obere Platte (2213) umfasst, die mit einer Oberseite von jedem der Verbindungsstäbe (2212) verbunden ist, und der Stützstab (2211) und die obere Platte (2213) zusammenwirkend einen Drehraum (22b) definieren,
wobei die Drehwelle (30) zwischen der oberen Platte (2213) und dem Stützstab (2211) entlang einer Höhenrichtung des Basishauptteils (221) angeordnet ist, die Nase (123) in der Lage ist, sich um eine Achse der Drehwelle (30) in dem Drehraum (22b) zu drehen, in der Lage ist, an der oberen Platte (2213) anzustoßen, um die offene Position der Abdeckhülle (11) zu begrenzen, und in der Lage ist, an den Stützstab (2211) anzustoßen, um die geschlossene Position der Abdeckhülle (11) zu begrenzen.

10. Gehäuse nach Anspruch 9, wobei mindestens eines von dem Verbindungsabschnitt (1221) und der Nase (123) eine Abmessung entlang der axialen Richtung der Drehwelle (30) aufweist, die kleiner als eine Abmessung des ersten Plattenhauptteils (121) entlang der axialen Richtung der Drehwelle (30) ist.

11. Gehäuse nach Anspruch 9, wobei die obere Platte (2213) einen Öffnungsschlitz (2213a) definiert, der hin zum Verbindungsabschnitt (1221) offen ist, wobei ein Abschnitt des Verbindungsabschnitts (1221) in dem Öffnungsschlitz (2213a) angeordnet ist, wenn sich die Abdeckhülle (11) in der geschlossenen Position befindet.

12. Gehäuse nach einem der Ansprüche 4 bis 11, wobei das Gehäuse ein elastisches Element (40) umfasst, die Abdeckhülle (11) eine kritische Position aufweist, die zwischen der geschlossenen Position und der offenen Position angeordnet ist, und das elastische Element (40) zwischen die Montagebasis (22) und die Verbindungsplatte (12) gespannt ist, wobei ein Drehmoment, das durch das elastische Element (40) auf die Gehäuseabdeckung ausgeübt wird, null ist, wenn die Abdeckhülle (11) in der kritischen Position angeordnet ist, und das elastische Element (40) ein Antriebsdrehmoment auf die Gehäuseabdeckung ausübt, um die Abdeckhülle (11) anzutreiben, sich in die geschlossene oder in die offene Position zu bewegen, wenn die Abdeckhülle (11) entlang einer Drehrichtung zu einer der Seiten von der kritischen Position abweicht.

13. Gehäuse nach Anspruch 12, wobei das elastische Element (40) eine oder mehrere Torsionsfedern (40') umfasst und jede der einen oder mehreren Torsionsfedern (40') einen ersten Schenkel (41), einen zweiten Schekel (42) und einen Spiralhauptteil (43) aufweist, der erste Schenkel (41) und der zweite Schenkel (42) in einer axialen Richtung mit gegenüberliegenden Seiten des Spiralhauptteils (43) verbunden sind, der erste Schenkel (41) mit dem Basishauptteil (221) verbunden ist, der zweite Schenkel (42) mit der Verbindungsplatte (12) verbunden ist, um die Abdeckhülle (11) anzutreiben, sich um eine Achse der Drehwelle (30) zu drehen, und ein Winkel zwischen einer Achse des Spiralhauptteils (43) und der Achse der Drehwelle (30) in einem Bereich von 45° bis 90° liegt.

14. Gehäuse nach Anspruch 13, wobei die Anzahl der einen oder mehreren Torsionsfedern (40') zwei ist, ein Ende des ersten Schenkels (41) einer der Torsionsfedern (40') fest mit einem Ende des ersten Schenkels (41) der anderen der Torsionsfedern (40') verbunden ist und die Achse des Spiralhauptteils (43) einer der Torsionsfedern (40') im Wesentlichen parallel zu der Achse des Spiralhauptteils (43) der anderen der Torsionsfedern (40') liegt und wobei die Verbindungsplatte (12) Einsetzöffnungen (12a) an beiden gegenüberliegenden Seiten der Verbindungsplatte (12) entlang einer axialen Richtung der Drehwelle (30) definiert, ein Ende des zweiten Schenkels (42) einer der Torsionsfedern (40') in einer der Einsetzöffnungen (12a) angeordnet ist und ein Ende des zweiten Schenkels (42) der anderen der Torsionsfedern (40') in der anderen der Einsetzöffnungen (12a) angeordnet ist.

15. Gehäuse nach einem der Ansprüche 4 bis 11, wobei der Hüllenhauptteil (21) einen Einsetzschlitz (20a) an einer Innenfläche des Gehäuses definiert, der Basishauptteil (221) in der Lage ist, von der oberen Öffnung des Halteraums (21a) in den Einsetzschlitz (20a) eingesetzt zu werden, und der Basishauptteil (221) auf eine untere Wand des Einsetzschlitzes (20a) gestützt ist, und wobei der Gehäusehauptteil einen ersten Vorstehstab (23) und zwei zweite Vorstehstäbe (24) umfasst, wobei der erste Vorstehstab (23) und die zwei zweiten Vorstehstäbe (24) von der Innenfläche des Hüllenhauptteils (21) hervorstehen, der erste Vorstehstab (23) sich in einer Richtung erstreckt, die im Wesentlichen parallel zu einer axialen Richtung der Drehwelle (30) liegt, und sich jeder der zwei zweiten Vorstehstäbe (24) von einem entsprechenden von zwei gegenüberliegenden Enden des ersten Vorstehstabes (23) hin zur Gehäuseabdeckung erstreckt, ein Ende von einem der zweiten Vorstehstäbe (24), das von dem Hüllenhauptteil (21) entfernt liegt, zu einer Seite des anderen der zweiten Vorstehstäbe (24) gebogen ist, die zwei zweiten Vorstehstäbe (24), der erste Vorstehstab (23) und die Innenfläche des Hüllenhauptteils (21) zusammenwirkend den Einsetzschlitz (20a) definieren und der Basishauptteil (221) auf den ersten Vorstehstab (23) gestützt ist.

## Revendications

1. Mécanisme rotatif, **caractérisé en ce qu'**il comprend :
un panneau de liaison (12), présentant une première position et une deuxième position ;
une base de montage (22), comprenant un corps de base (221) et deux portions saillantes (222), l'une des deux portions saillantes (222) s'étendant le long de l'un des deux côtés du corps de base (221), et l'autre des deux portions saillantes (222) s'étendant le long de l'autre des deux côtés du corps de base (221), le corps de base (221) définissant une encoche (221a), l'encoche (221a) étant définie entre les deux portions saillantes (222), chacune des portions saillantes (222) définissant une fente d'accueil (222a), et la fente d'accueil (222a) s'ouvrant vers un côté externe du corps de base (221) ; lorsque le panneau de liaison (12) est agencé dans la première position, une portion du panneau de liaison (12) étant agencée sur un côté interne du corps de base (221) ; et, lorsque le panneau de liaison (12) est agencé dans la deuxième position, la portion du panneau de liaison (12) étant agencée dans l'encoche (221a) et fermant l'encoche (221a) ; et
un arbre rotatif (30), s'étendant à travers le panneau de liaison (12) et le corps de base (221) et s'étendant en outre dans la fente d'accueil (222a) afin de permettre le passage du panneau de liaison (12) entre la première position et la deuxième position.

2. Mécanisme rotatif selon la revendication 1, dans lequel
le corps de base (221) comprend une barre de support (2211) et deux barres de liaison (2212), la barre de support (2211) s'étendant dans une direction axiale de l'arbre rotatif (30), l'une des barres de liaison (2212) étant reliée à l'une des deux extrémités opposées de la barre de support (2211), et l'autre des barres de liaison (2212) étant reliée à l'autre des deux extrémités opposées de la barre de support (2211) ; la barre de support (2211) et les barres de liaison (2212) coopérant pour définir l'encoche (221a), chacune des portions saillantes (222) étant reliée à une barre de liaison correspondante des barres de liaison (2212), et l'arbre rotatif (30) s'étendant à travers les barres de liaison (2212) et s'étendant en outre dans la fente d'accueil (222a) ; et
le panneau de liaison (12) comprenant un premier corps de panneau (121), le premier corps de panneau (121) comprenant une portion intermédiaire (1211) et une portion de bord externe (1212), la portion de bord externe (1212) étant agencée à la périphérie de la portion intermédiaire (1211), et la portion de bord externe (1212) définissant, sur chacun des deux côtés opposés suivant la direction axiale de l'arbre rotatif (30), une fente d'évitement (121a) ; lorsque le panneau de liaison (12) est agencé dans la deuxième position, une portion de chacune des barres de liaison (2212) étant agencée dans la fente d'évitement (121a), la portion de bord externe (1212), la barre de support (2211), et les deux barres de liaison (2212) délimitant ensemble une structure annulaire, et la portion intermédiaire (1211) étant agencée dans la structure annulaire.

3. Mécanisme rotatif selon la revendication 2, dans lequel le panneau de liaison (12) comprend en outre un deuxième corps de panneau (122), le deuxième corps de panneau (122) est relié à une face d'extrémité interne du premier corps de panneau (121), le deuxième corps de panneau (122) définit un trou d'arbre (1221a) agencé suivant la direction axiale de l'arbre rotatif (30), et l'arbre rotatif (30) pénètre dans le deuxième trou d'arbre (1221a).

4. Boîtier de logement, comprenant :
une coque-couvercle (11) ;
un corps de coque (21), le corps de coque (21) définissant un espace de réception (21a) pourvu d'une ouverture supérieure et d'une autre encoche (21b) définie dans une paroi latérale du corps de coque (21), et l'espace de réception (21a) étant en liaison fluide avec l'autre encoche (21b) ; et
le mécanisme rotatif selon la revendication 1, le panneau de liaison (12) étant relié à la coque-couvercle (11), la base de montage (22) étant reliée à l'autre encoche (21b), les portions saillantes (222) étant agencées dans l'espace de réception (21a), la fente d'accueil (222a) s'ouvrant vers la paroi latérale du corps de coque (21), et la fente d'accueil (222a) et la paroi latérale du corps de coque (21) coopérant pour définir un autre trou d'arbre (22a) ; et
dans lequel l'arbre rotatif (30) s'étend à travers le panneau de liaison (12) et le corps de base (221) et s'étend en outre dans l'autre trou d'arbre (22a) pour permettre le passage de la coque-couvercle (11) entre une position ouverte et une position fermée dans laquelle le corps de coque (21) est fermé ; lorsque la coque-couvercle (11) est en position fermée, le panneau de liaison (12) occupe la deuxième position, une portion du panneau de liaison (12) est agencée dans l'encoche (221a) pour fermer l'encoche (221a), et une portion du corps de base (221) et la portion du panneau de liaison (12) coopèrent pour fermer l'autre encoche (21b).

5. Boîtier de logement selon la revendication 4, dans lequel la base de montage (22) comprend :
une barre de support (2211), s'étendant dans une direction axiale de l'arbre rotatif (30), la barre de support (2211) comprenant une surface en gradin (2211a) formée sur une face d'extrémité de la barre de support (2211) orientée vers un côté externe du corps de coque (21), et la surface en gradin (2211a) prenant appui sur une paroi inférieure de l'autre encoche (21b) ; et
deux barres de liaison (2212), l'une des barres de liaison (2212) étant reliée à l'une des deux extrémités opposées de la barre de support (2211), l'autre des barres de liaison (2212) étant reliée à l'autre des deux extrémités opposées de la barre de support (2211), et la barre de support (2211) et les deux barres de liaison (2212) coopérant pour définir l'encoche (221a) ; et
dans lequel chacune des portions saillantes (222) est reliée à une barre de liaison correspondante des barres de liaison (2212), l'arbre rotatif (30) s'étend à travers les barres de liaison (2212) et dans l'autre trou d'arbre (22a), et la barre de support (2211) et les deux barres de liaison (2212) sont reliées à l'autre encoche (21b).

6. Boîtier de logement selon la revendication 5, dans lequel le panneau de liaison (12) comprend :
un premier corps de panneau (121), définissant une fente d'évitement (121a) sur chacune des deux extrémités opposées du premier corps de panneau (121) suivant la direction axiale de l'arbre rotatif (30) ; lorsque la coque-couvercle (11) est en position fermée, une portion de chacune des barres de liaison (2212) étant agencée dans la fente d'évitement (121a), et la portion de chacune des barres de liaison (2212), une portion de la barre de support (2211), et le premier corps de panneau (121) coopérant pour enfermer l'autre encoche (21b) ; et
un deuxième corps de panneau (122), comprenant une portion de liaison (1221) et une portion en extension (1222) s'étendant depuis la portion de liaison (1221) vers le couvercle de boîtier, la portion de liaison (1221) étant reliée à un côté du premier corps de panneau (121) proche de l'espace de réception (21a), la portion en extension (1222) étant reliée à la coque-couvercle (11), la portion de liaison (1221) définissant un trou d'arbre (1221a) agencé dans la direction axiale de l'arbre rotatif (30), et l'arbre rotatif (30) pénétrant dans le trou d'arbre (1221a).

7. Boîtier de logement selon la revendication 6, dans lequel le premier corps de panneau (121) comprend une portion intermédiaire (1211) et une portion de bord externe (1212), la portion de bord externe (1212) est agencée à la périphérie de la portion intermédiaire (1211), et la fente d'évitement (121a) est définie dans la portion de bord externe (1212) ; la portion de bord externe (1212), la barre de support (2211), et les barres de liaison (2212) délimitent ensemble une structure annulaire, et la portion intermédiaire (1211) est agencée dans la structure annulaire.

8. Boîtier de logement selon la revendication 6, dans lequel le premier corps de panneau (121) définit une rainure (121b) sur une face d'extrémité tournée vers l'espace de réception (21a), la rainure (121b) s'étend dans la direction axiale de l'arbre rotatif (30), et une portion de l'arbre rotatif (30) est agencée dans la rainure (121b).

9. Boîtier de logement selon la revendication 6, dans lequel le deuxième corps de panneau (122) comprend une patte (123) s'étendant depuis la portion de liaison (1221) vers le corps de base (221), le corps de base (221) comprend un panneau supérieur (2213) relié au sommet de chacune des barres de liaison (2212), et la barre de support (2211) et le panneau supérieur (2213) coopèrent pour définir un espace de rotation (22b) ;
l'arbre rotatif (30) est agencé entre le panneau supérieur (2213) et la barre de support (2211) suivant une direction de hauteur du corps de base (221), la patte (123) est apte à tourner autour d'un axe de l'arbre rotatif (30) à l'intérieur de l'espace de rotation (22b), apte à venir en butée contre le panneau supérieur (2213) pour limiter la position ouverte de la coque-couvercle (11), et apte à venir en butée contre la barre de support (2211) pour limiter la position fermée de la coque-couvercle (11).

10. Boîtier de logement selon la revendication 9, dans lequel la portion de liaison (1221) et/ou la patte (123) présentent/présente une dimension suivant la direction axiale de l'arbre rotatif (30) inférieure à une dimension du premier corps de panneau (121) suivant la direction axiale de l'arbre rotatif (30).

11. Boîtier de logement selon la revendication 9, dans lequel le panneau supérieur (2213) définit une fente d'ouverture (2213a) s'ouvrant vers la portion de liaison (1221) ; lorsque la coque-couvercle (11) est en position fermée, une portion de la portion de liaison (1221) est agencée à l'intérieur de la fente d'ouverture (2213a).

12. Boîtier de logement selon l'une quelconque des revendications 4 à 11, le boîtier de logement comprenant un élément élastique (40), la coque-couvercle (11) présentant une position critique agencée entre la position fermée et la position ouverte, et l'élément élastique (40) étant chargé entre la base de montage (22) et le panneau de liaison (12) ; lorsque la coque-couvercle (11) est agencée dans la position critique, un couple exercé par l'élément élastique (40) sur le couvercle de boîtier étant nul ; et, lorsque la coque-couvercle (11) s'écarte de part ou d'autre de la position critique suivant une direction de rotation, l'élément élastique (40) exerçant un couple d'entraînement sur le couvercle de boîtier afin d'entraîner la coque-couvercle (11) vers la position fermée ou la position ouverte.

13. Boîtier de logement selon la revendication 12, dans lequel l'élément élastique (40) comprend un ou plusieurs ressorts de torsion (40'), et chacun des un ou plusieurs ressorts de torsion (40') comprend une première branche (41), une deuxième branche (42), et un corps spiralé (43) ; la première branche (41) et la deuxième branche (42) sont reliées à des côtés opposés du corps spiralé (43) dans une direction axiale, la première branche (41) est reliée au corps de base (221), la deuxième branche (42) est reliée au panneau de liaison (12) afin d'entraîner la coque-couvercle (11) en rotation autour d'un axe de l'arbre rotatif (30), et un angle formé entre un axe du corps spiralé (43) et l'axe de l'arbre rotatif (30) est compris entre 45° et 90°.

14. Boîtier de logement selon la revendication 13, dans lequel le nombre des un ou plusieurs ressorts de torsion (40') est égal à deux, une extrémité de la première branche (41) de l'un des ressorts de torsion (40') est solidarisée à une extrémité de la première branche (41) de l'autre des ressorts de torsion (40'), et l'axe du corps spiralé (43) de l'un des ressorts de torsion (40') est sensiblement parallèle à l'axe du corps spiralé (43) de l'autre des ressorts de torsion (40') ; et dans lequel le panneau de liaison (12) définit des trous d'insertion (12a) sur les deux côtés opposés du panneau de liaison (12) suivant une direction axiale de l'arbre rotatif (30), une extrémité de la deuxième branche (42) de l'un des ressorts de torsion (40') est agencée dans l'un des trous d'insertion (12a), et une extrémité de la deuxième branche (42) de l'autre des ressorts de torsion (40') étant agencée dans l'autre des trous d'insertion (12a).

15. Boîtier de logement selon l'une quelconque des revendications 4 à 11, dans lequel le corps de coque (21) définit une fente d'insertion (20a) sur une surface interne du logement, le corps de base (221) est apte à être inséré dans la fente d'insertion (20a) à partir de l'ouverture supérieure de l'espace de réception (21a), et le corps de base (221) prend appui sur une paroi inférieure de la fente d'insertion (20a) ; et dans lequel le corps de boîtier comprend une première barre en saillie (23) et deux deuxièmes barres en saillie (24), la première barre en saillie (23) et les deux deuxièmes barres en saillie (24) font saillie depuis la surface interne du corps de coque (21), la première barre en saillie (23) s'étend dans une direction sensiblement parallèle à une direction axiale de l'arbre rotatif (30), et chacune des deux deuxièmes barres en saillie (24) s'étend depuis une extrémité correspondante des deux extrémités opposées de la première barre en saillie (23) vers le couvercle de boîtier ; une extrémité de l'une des deuxièmes barres en saillie (24), éloignée du corps de coque (21), est courbée vers un côté de l'autre des deuxièmes barres en saillie (24), les deux deuxièmes barres en saillie (24), la première barre en saillie (23), et la surface interne du corps de coque (21) coopèrent pour définir la fente d'insertion (20a), et le corps de base (221) prend appui sur la première barre en saillie (23).
